(19) 

Europäisches
Patentamt
European
Patent Office
Office européen
des brevets

(11) **EP 4 170 694 A1**

(12) **EUROPEAN PATENT APPLICATION**
published in accordance with Art. 153(4) EPC

(43) Date of publication:
**26.04.2023 Bulletin 2023/17**

(21) Application number: **21836935.3**

(22) Date of filing: **09.07.2021**

(51) International Patent Classification (IPC):
*H01J 37/05* (2006.01)    *H01J 37/252* (2006.01)
*G01N 23/227* (2018.01)    *H01J 49/48* (2006.01)

(52) Cooperative Patent Classification (CPC):
**G01N 23/227; H01J 37/05; H01J 37/252;**
**H01J 49/48**

(86) International application number:
**PCT/JP2021/026052**

(87) International publication number:
**WO 2022/009995 (13.01.2022 Gazette 2022/02)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **09.07.2020 JP 2020118687**

(71) Applicant: **Inter-University Research Institute**
**Corporation**
**National Institutes of Natural Sciences**
**Tokyo 181-8588 (JP)**

(72) Inventors:
- **MATSUDA, Hiroyuki**
  **Okazaki-shi, Aichi 444-8585 (JP)**
- **MATSUI, Fumihiko**
  **Okazaki-shi, Aichi 444-8585 (JP)**

(74) Representative: **Fleck, Hermann-Josef**
**Jeck, Fleck & partner mbB**
**Patentanwälte**
**Klingengasse 2**
**71665 Vaihingen/Enz (DE)**

(54) **ELECTROSTATIC DEFLECTION CONVERGENCE-TYPE ENERGY ANALYZER,**
**IMAGING-TYPE ELECTRON SPECTROSCOPIC DEVICE, REFLECTING IMAGING-TYPE**
**ELECTRON SPECTROSCOPIC DEVICE, AND SPIN VECTOR DISTRIBUTION IMAGING DEVICE**

(57)    Provided is an electrostatic deflection convergence-type energy analyzer having a wide acceptance angle and high two-dimensional convergence performance, is capable of imaging two-dimensional real-space images and emission angle distributions, and enables two-dimensional convergence and imaging at 90° deflection with respect to an incident direction. Outer electrodes and inner electrodes are disposed along the shapes of two rotation bodies formed on the inside and the outside for a common rotation axis. The inner-surface shape of the outer electrode has a tapered shape becoming smaller in diameter toward both ends. The outer-surface shape of the inner electrodes has a tapered shape becoming smaller in diameter toward both ends. An electron incident hole and exit hole are formed in each of the outer electrodes at both ends on the rotation axis. The outer and the inner electrodes have applied thereto voltages for accelerating and decelerating electrons in proportion to the energy of incident electrons.

FIG. 1

EP 4 170 694 A1

**Description**

**[Technical Field]**

The present invention relates to photoelectron spectrometer such as UPS (Ultraviolet Photoelectron Spectroscopy), XPS (X-ray Photoelectron Spectroscopy) and ARPES (Angle Resolved Photoelectron Spectroscopy), Auger electron spectroscopy, photoelectron diffraction apparatus, photoemission electron microscope and spin polarization analyzer.

**[Background Art]**

In an electron spectrometer, sensitivity is one of the most important performances along with energy resolution. In the measurement of photoelectrons or Auger electrons, when the signal is very weak and almost buried in noise, it is necessary to significantly increase the accumulation time in order to obtain a sufficient signal-to-noise ratio (SN ratio). However, in this case, not only cannot the measurement be performed efficiently, but it is also often the case that the continuous measurement time must be limited due to time constraints such as the utilization time of the synchrotron radiation facility and the duration time of the excitation light source. In addition, in a sample which is susceptible to radiation damage such as an organic material or a sample which is likely to change over time, long-term measurement is hindered, and in many cases, a very weak signal is not sufficiently captured.

Also, it is known that advanced doping techniques are used in the research of new semiconductor materials and superconducting materials, and that even a very small amount of dopant can bring about a great change in the material. Capturing feeble signals from such dopants is extremely important in the development of new materials.

In an electron spectroscopy apparatus, it is possible to measure the emission angle distribution in addition to the measurement of the energy distribution of electrons emitted from a sample. Information on the composition of elements can be obtained by measuring the energy distribution, and information on the composition in the depth direction and electronic state information can be obtained by measuring the emission angle distribution.

Also, since the momentum in the in-plane direction of a sample is preserved in the photoelectron emission process, information on the momentum of electrons in the substance can be obtained by measuring the kinetic energy of the photoelectrons and the emission angle. By irradiating the sample with ultraviolet rays or X-rays and measuring the kinetic energy and emission angle distribution of photoelectrons by adjusting the energy to the valence band, it is possible to evaluate the energy band structure of the substance and largely determine the properties of the substance.

Further, in the case of photoelectron emission from the inner shell, when the kinetic energy is several hundred eV or more, a strong peak called a forward focusing peak appears in the direction connecting a photoelectron emitting atom and a scatterer atom around it. By measuring this peak over a wide angular range, it becomes possible to directly capture the state of the atomic arrangement around a specific atom. It is also possible to determine the interatomic distance from the diameter of the diffraction ring formed around the forward focusing peak. As mentioned above, the measurement of the emission angle distribution by the electron spectrometer makes it possible to obtain detailed information at the atomic level, which is difficult with other analytical methods. And it will be a very powerful method for developing new materials and researching unknown physical characteristics expression mechanism.

However, the widespread concentric hemispherical analyzer (hereinafter referred to as CHA) has a high energy resolution, but the input lens has a small acceptance cone angle, and it was difficult to use for two-dimensional photoelectron spectroscopy and atomic structure analysis, which acquires the emission angle distribution over a wide cone angle. Also, a coaxial cylindrical mirror type energy analyzer (hereinafter referred to as CMA), which is widely used mainly for Auger electron spectroscopy, is known as an analyzer with a large acceptance cone angle. However, the acceptance cone angle was still insufficient for the above analysis.

Therefore, a two-dimensional spherical mirror analyzer with an acceptance cone angle of ±60° has been developed (Non-Patent Document 1), and has measured band dispersion structures of various samples (Non-Patent Documents 2 and 3), and atomic arrangement structures of various samples (Non-Patent Documents 4 and 5). Although the energy resolution of this analyzer improved step by step, it was not possible to achieve sufficient resolution for more detailed analysis such as structural analysis by resolving chemical shifts. Therefore, a spherical aberration correction lens with an acceptance cone angle of ±45° to ±50° was invented (Patent Documents 1 and 2, Non-Patent Documents 6 and 7), and an attempt was made to combine it with the input lens of the CHA (Non-Patent Document 8). Also, recently, the inventors of the present invention have proposed a spherical aberration correction lens with an omnidirectional acceptance angle (±90°) (Patent Document 3). In the ultraviolet region of several tens of eV or less, a photoelectron analyzer with the omnidirectional acceptance angle has already been developed using PEEM (photoelectron microscope) technology (Non-Patent Documents 9 and 10).

The CHA described above has already been widely used, and systems of various designs using CHA have been developed so far. However, it is characterized by a very small acceptance cone angle in the energy dispersion direction of the concentric hemispherical part. As a result, in order to obtain high energy resolution, it is necessary to suppress the incident angle to the concentric hemispherical part to about $\pm 2°$ or less, and in order to obtain high spatial resolution and high angular resolution in the measurement of two-dimensional real-space image and emission angle distribution, it is necessary to suppress the incident angle to the concentric hemispherical part to $\pm 2°$ or $\pm 1°$ or less. Therefore, in developing a high-performance analyzer using CHA, it is necessary to design the input lens system on the assumption that the acceptance cone angle of the concentric hemispherical part is extremely small. In a conventional input lens that uses an ordinary electrostatic lens whose spherical aberration increases with the incident angle, the limit of the acceptance cone angle to form a convergent beam is about $\pm 7°$. In this case, the convergence angle can be made about $\pm 2°$ at a relatively low magnification.

Here, the magnification (M) is defined by M=b/a, where a is the size of the observed object on the object plane (sample surface) of the input lens, and b is the image size of the observed object on the image plane of the input lens. In the case of an Einzel lens in which the energy of electrons does not change between the entrance and exit of the lens, this value is roughly the ratio of the incidence angle to the convergence angle. The magnification of the input lens is one of the important conditions that determine the sensitivity of CHA. Setting this magnification to a high value results in a significant decrease in sensitivity depending on the size of the slit provided at the entrance of the concentric hemispherical part. Therefore, the conventional input lens described above is usually set at a low magnification. For example, when electrons with an opening angle of $\pm 7°$ are converged at an opening angle of $\pm 2°$ using the Einzel lens, the magnification can be as low as about 3.5.

On the other hand, for the purpose of efficiently measuring the emission angle distribution over a wide angle range, as described above, spherical aberration correction lenses have been developed that widen the acceptance cone angle to about $\pm 50°$ (Patent Documents 1 and 2, Non-Patent Documents 6 and 7), and an omnidirectional acceptance angle ($\pm 90°$) convergence lens has also been proposed by the inventors. An omnidirectional acceptance cone angle convergence lens allows the realization of an analyzer that fully determines the energy and momentum of electrons. However, when designing the input lens system that accepts electrons at a wide angle using such a wide acceptance cone angle convergence lens and converges electrons at the opening angle of about $\pm 2°$ or less, compared to conventional input lenses, the problem is that the magnification is much higher and the length of the lens system is considerably longer. For example, when electrons are accepted at an acceptance angle of $\pm 50°$ or $\pm 90°$ and converged at an opening angle of $\pm 2°$, even without deceleration, the illuminated spot on the sample is magnified by a factor of 25 or 45 at the exit plane of the wide acceptance cone angle convergence lens. Further, when decelerating electrons of energy E to energy E' in order to obtain high energy resolution, the magnification M can be expressed by the following equation from the conservation of brightness. Here, Mo is the magnification determined by the incident angle and the exit angle.

[Equation 1]

$$M = M_0 \sqrt{E / E'}$$

For example, when decelerating electrons of 1000 eV to 50 eV with the above lens, the magnification is about 100 to 200 times. With such a high magnification, the number of electrons blocked by the slit inserted into the entrance of the concentric hemispherical part increases, and the slit width must be widened to obtain sufficient sensitivity. However, widening the slit width results in a decrease in energy resolution. In many conventional CHAs, the magnification of the input lens is about 5 times or less.

The best way to solve such problems is to widen the acceptance cone angle of the energy analyzer. One might then consider using a CMA with a wider acceptance cone angle instead of the concentric hemispherical part of the CHA. However, the CMA uses grids at the entrance and exit of the inner cylinder through which the electrons pass, and the electrons are disturbed by scattering when passing through the entrance and exit. Therefore, it is difficult to form real-space images or angular distributions with high resolution using the CMA.

As described above, in order to realize a high-performance electron spectrometer that forms a real-space image or an angular distribution, an energy analyzer with a wider acceptance cone angle than the concentric hemispherical part of the CHA without using a grid is required.

Next, in addition to the measurement of electron energy and momentum, the measurement of electron spin, which can influence the properties of substances and materials, will be described. Spin polarization analyzers include Mott detectors and SPLEED detectors using spin-orbit interaction, and VLEED detectors using spin-exchange interaction (Non-Patent Document 11). Also, in recent years, a two-dimensional spin analyzer using an Ir (001) single crystal substrate has been developed (Non-Patent Document 10).

Also, by combining a conventionally known electrostatic 90° deflector and a magnetic lens type spin rotator (hereinafter referred to as a spin rotator), it is possible to measure the spin polarization in three directions, in-plane and normal directions of sample surface (Patent Document 5). However, there is a problem that the conventional electrostatic 90° deflector does not have the imaging performance to converge the beam two-dimensionally, and cannot be applied to a two-dimensional spin analyzer that measures the real-space image and the emission angle distribution in detail.

By bending the trajectory of electrons emitted from the sample by 90° in the electric field before entering the spin detector, the spin polarization in the normal to the sample surface can be measured. This method has already been realized by combining a 1/4 cylindrical electrostatic 90° deflector (hereinafter referred to as a 90° deflector) (Non-Patent Document 11) and the VLEED detector. Also, in the 90° deflector, under the condition that the central force and the centrifugal force due to the cylindrical electric field are balanced, the electrons draw a circular arc and change their direction by 90°. Alternatively, electrons can be deflected by 90° by using a spherically symmetric electric field instead of the cylindrical electric field. The spin polarization analyzer using the 90° deflector of this method (hereinafter referred to as a 90° spherical deflector) is also available (Non-Patent Document 12).

However, for the cylindrically symmetric electric field used in the 90° deflector and the spherically symmetric electric field used in the 90° spherical deflector, the convergence in the plane of deflection is at 127° and 180° deflection, respectively, and does not converge at 90° deflection. Therefore, an improved 90° deflector that can deflect and converge an electron beam emitted from one point by 90° in the deflection plane direction (Non-Patent Document 13) and a 90° deflection analyzer that combines a lens with a 90° spherical deflector and that can deflect and converge the electron beam by 90° in the deflection plane direction has also been proposed (Non-Patent Document 14). However, among electrons incident at a constant aperture angle, electrons in the in-plane direction of deflection can be converged, but at the same time electrons in other directions cannot be converged. Therefore, it is difficult to apply them for two-dimensional spin analysis in which the two-dimensional real-space image and emission angle distribution are analyzed.

Imaging performance for two-dimensional real-space and emission-angle distributions is important for detailed analysis of the spin polarization. The two-dimensional spin analyzer disclosed in Non-Patent Document 10 enables two-dimensional analysis of spin polarization in the in-plane direction of the sample, but two-dimensional analysis of spin polarization in the normal to the sample surface is not yet realized. Detailed analysis of the spin polarization normal to the sample surface is expected to become indispensable in future spintronics researches such as for high-density magnetic storage devices. In order to perform the two-dimensional analysis of the spin polarization normal to the sample surface, as described above, it is effective to deflect the electrons emitted from the sample by 90° with the electric field before entering the two-dimensional spin detector. However, when the conventional electrostatic 90° deflector is used, there is a problem that the convergence is only in the direction of the plane of deflection and the two-dimensional image forming performance is not available, resulting in the loss of two-dimensional position and angle information.

On the other hand, it is also possible to perform three-dimensional measurement of spin polarization by using the Wien filter type spin rotator, instead of the electrostatic 90° deflector (see, for example, Patent Document 4 and Non-Patent Document 15). In particular, in the spin rotator shown in Patent Document 4, the multipole Wien filter enables three-dimensional manipulation of spins.

The Wien filter is an energy analyzer that utilizes the fact that when electrons are incident on orthogonal electric and magnetic fields, only electrons with a specific energy go straight due to the balance between the force received from the electric field and the force received from the magnetic field (Lorentz force). In this analyzer, by adjusting the voltage applied to the electric field forming electrode and the voltage (or current) applied to the electromagnet, it is possible to converge the incident electrons with a constant opening angle. Also, the Wien filter also has the effect of rotating electron spins, and by appropriately adjusting the applied voltage (or current), spins in the direction of the optical axis can be rotated in a direction perpendicular to the optical axis.

However, the condition for converging the electron beam emitted from one point does not match the condition for rotating the spin by 90°, and if the Wien filter is set to the latter condition, the electron beam cannot be converged at the exit. Although it is used for a parallel electron beam in a photoelectron microscope or the like in order to observe three-dimensional resolved real-space image of spin polarization, it is difficult to apply the Wien filter type spin rotator to the two-dimensional analyzer capable of forming both the two-dimensional real-space image and the emission angle distribution. Therefore, in order to obtain both the three-dimensional spin-resolved two-dimensional real-space image and the emission angle distribution, it is necessary to provide convergence and imaging capabilities not only in the deflection plane direction but also in the direction perpendicular thereto at the same time that the direction of the electrons is deflected by 90°.

[Prior Art]

[Patent Document]

[Patent Document 1] JP 4802340 B
[Patent Document 2] JP 4900389 B
[Patent Document 3] WO 2021/125297
[Patent Document 4] WO 2012/173007
[Patent Document 5] WO 2012/066024

[Non-patent Document]

[Non-patent Document 1] H. Daimon,"New display-type analyzer for the energy and the angular distribution of charged particles", Rev. Sci. Instrum. 59, 545 (1988).
[Non-patent Document 2] F. Matsui, et al., "Three-dimensional band mapping of graphite", Appl. Phys. Lett. 81, 2556 (2002).
[Non-patent Document 3] F. Matsui, et al., "Atomic-orbital analysis of the Cu Fermi surface by two-dimensional photoelectron spectroscopy", Phys. Rev. B 72, 195417 (2005).
[Non-patent Document 4] F. Matsui, T. Matsushita and H. Daimon, "Stereo atomscope and diffraction spectroscopy-Atomic site specific property analysis", J. Electron Spectrosc. Relat. Phenom. 178-179, 221 (2010).
[Non-patent Document 5] F. Matsui, et al., "Selective detection of angular-momentum-polarized Auger electrons by atomic stereography", Phys. Rev. Lett. 114, 015501 (2015).
[Non-patent Document 6] H. Matsuda, H. Daimon, M. Kato and M. Kudo, "Approach for simultaneous measurement of two-dimensional angular distribution of charged particles: Spherical aberration correction using an ellipsoidal mesh", Phys. Rev. E 71, 066503 (2005).
[Non-patent Document 7] H. Matsuda and H. Daimon, "Approach for simultaneous measurement of two-dimensional angular distribution of charged particles. II. Deceleration and focusing of wide-angle beams using a curved mesh lens", Phys. Rev. E 74, 036501 (2006).
[Non-patent Document 8] H. Matsuda, et al., "Development of display-type ellipsoidal mesh analyzer: Computational evaluation and experimental validation", J. Electron Spectrosc. Relat. Phenom. 195 (2014) 382.
[Non-patent Document 9] M. Kotsugi et al., "Microspectroscopic two-dimensional Fermi surface mapping using a photoelectron emission microscope", Rev. Sci. Instrum., 74, 2754 (2003).
[Non-patent Document 10] C. Tusche et al.,"Spin resolved bandstructure imaging with a high resolution momentum microscope", Ultramicroscopy 159, 520 (2015).
[Non-patent Document 11] T. Okuda, et al., J. Electron Spectrosc. Relat. Phenom. 201, 23 (2015).
[Non-patent Document 12] E. Kisker, et al., Rev. Sci. Instrum. 50, 1598 (1979).
[Non-patent Document 13] L.Vattuone, M.Rocca,"Electrostatic electron analyzer with 90° deflection angle", Rev. Sci. Instrum.73 3861 (2002).
[Non-patent Document 14] A. W. Ross, et al., J. Electron Spectrosc. Relat. Phenom. 69, 189 (1994).
[Non-patent Document 15] T. Kohashi, et al., "A spin rotator used for detecting all three magnetization vector components in spin-polarized electron microscopy", J. Mag. Soc. Jpn. 18, 7 (1994).

**[Outline of the Invention]**

**[Problems to be Solved by the Invention]**

In view of this situation, a first object of the present invention is to provide an electrostatic deflection convergence-type energy analyzer capable of performing analysis with a higher energy resolution even if the acceptance cone angle is wider than that of the concentric hemispherical part of the CHA.

Also, a second object of the present invention is to provide an imaging-type electron spectrometer capable of forming a two-dimensional real-space image and an emission angle distribution with high energy resolution.

Further, a third object of the present invention is to provide a spin polarization analyzer capable of two-dimensional analysis of the spin polarization in the sample plane, in addition to which the electrons emitted from the sample can be deflected by 90° in an electric field before entering the two-dimensional spin detector, and the spin polarization in the direction perpendicular to the sample plane can be measured, and capable of three-dimensional measurement of spin polarization.

If these problems are resolved, it will be possible to provide an epoch-making analytical tool for detailed analysis of the three physical quantities of electrons (energy, momentum, and spin).

**[Means to Solve the Objects]**

In order to solve the above problems, an electrostatic deflection convergence-type energy analyzer of the present invention has the following features 1) to 7).

1) One or a plurality of outer electrodes and a plurality of inner electrodes are disposed along the shapes of two rotation bodies formed on the inside and the outside for a common rotation axis. Here, the two rotation bodies formed on the inside and the outside of the common rotation axis are the form in which the outer rotation body encompasses the inner rotation body.

2) An electron incident hole and exit hole are formed in the outer electrodes at both ends on the rotation axis.

3) A voltage applying means for applying a voltage for accelerating and decelerating electrons to the outer electrode and the inner electrode is provided.

Here, voltages for accelerating and decelerating electrons may be applied to the outer electrode and the inner electrodes in proportion to the energy of incident electrons.

4) The inner-surface shape of the outer electrode is a shape becoming smaller in diameter toward the incident hole and a shape becoming smaller in diameter toward the exit hole.

Here, the inner-surface shape of the outer electrode that becomes smaller in diameter toward the incident hole is desirably a tapered shape, a toroidal surface shape, or a ring shape. And the inner-surface shape of the outer electrode that becomes smaller in diameter toward the exit hole is desirably a tapered shape, a toroidal surface shape, or a ring shape.

5) The outer-surface shape of the inner electrode is a shape that becomes smaller in diameter toward the incident hole, a rod shape extending toward the incident hole, or a shape that becomes larger in diameter at the end on the incident hole side. And the outer-surface shape of the inner electrode is a shape that becomes smaller in diameter toward the exit hole, a rod shape extending toward the exit hole, or a shape that becomes larger in diameter at the end on the exit hole side.

Here, the outer-surface shape of the inner electrode that becomes smaller in diameter toward the incident hole is desirably a tapered shape or a toroidal surface shape, or a stepped shape that becomes gradually smaller in diameter toward the incident hole. And the outer-surface shape of the inner electrode that becomes smaller in diameter toward the exit hole is desirably a tapered shape or a toroidal surface shape, or a stepped shape that becomes gradually smaller in diameter toward the exit hole.

The inner-surface shape of the outer electrode and the outer-surface shape of the inner electrode are basically the same shapes on the incident hole side and the exit hole side, but are not necessarily the same shapes and may have different shapes. For example, various combinations are possible, such as a tapered shape on the incident hole side and a ring shape on the exit hole side. Also, the stepped shape that becomes gradually smaller in diameter includes, for example, even when an electrode with a small diameter is disposed in the center, the diameter is becoming smaller even by one step near the incident hole.

6) In the voltage applying means described in 3) above, the voltage applied to one or a plurality of inner electrodes except for the inner electrodes at both ends is a voltage that is at least twice a converted acceleration voltage, preferably at least 2 to 5 times, obtained by converting the energy of electrons into an acceleration voltage with reference to the potential of the outer electrode having the incident hole formed therein.

The converted acceleration voltage is defined as a voltage obtained by converting electron energy into an acceleration voltage. For example, the equivalent acceleration voltage of 1 eV is 1V. A voltage that is 2 to 5 times the converted acceleration voltage is a voltage that is 2E to 5EV, where E eV is the electron energy. Here, the voltage applied to one or a plurality of inner electrodes except for the inner electrodes at both ends is preferable to set a voltage that is at least 10 times or more the converted acceleration voltage obtained by converting the energy of electrons into an acceleration voltage with reference to the potential of the outer electrode having the incident hole formed therein. For example, a high voltage of 10 kV or higher is set for an electron energy of 1000 eV. This is because the incident angle to the energy analyzer can be further widened, the magnification of the input lens for wide acceptance cone angle can be further reduced, the sensitivity in wide acceptance cone angle can be further increased, and the energy resolution can be further improved.

7) So that the central trajectory is at a predetermined incident angle with the rotation axis, an applied voltage is applied to each electrode, adjusted such that the central trajectory of electrons incident from the incident hole converges on the position of the exit hole at a predetermined exit angle with the rotation axis.

According to the electrostatic deflection convergence-type energy analyzer having the above features 1) to 7), by optimizing the shape, arrangement, and applied voltage of each electrode, without using a grid, electrons can be accepted at a larger acceptance cone angle than the concentric hemispherical part of the CHA, deflected and converged for energy analysis. That is, by using the electrostatic deflection convergence-type energy analyzer of the present invention instead of the concentric hemispherical part of the CHA, the incident angle of the energy analyzer can be widened by about three times. As a result, the magnification of the input lens for wide acceptance cone angle can be reduced to about 1/3, the sensitivity in wide acceptance cone angle can be increased to about 9 times, and the energy resolution can be improved.

In the above-described electrostatic deflection convergence-type energy analyzer of the present invention, when the inner-surface shape of the outer electrode and the outer-surface shape of the inner electrode have a tapered shape that becomes smaller in diameter toward the incident hole and the exit hole, as for the tapered shape, the tapered angle measured from the rotation axis may be the same on the incident hole side and the exit hole side. Also, the inner-surface shape of the outer electrode and the outer-surface shape of the inner electrode may be symmetrical with respect to a plane perpendicularly intersecting a line connecting the incident hole and the exit hole at the midpoint of the line. For example, along the shape of two bodies of revolution obtained by rotating the lower bases of two isosceles trapezoids having different heights and having a common plane of symmetry as a common rotation axis, and symmetrically with respect to the plane of symmetry, a plurality of outer electrodes and a plurality of inner electrodes may be disposed.

In the above-described electrostatic deflection convergence-type energy analyzer of the present invention, the voltage applied to one or a plurality of the inner electrodes except for the inner electrodes at both ends is preferably set to a voltage that is at least 10 to 50 times or more of the converted acceleration voltage obtained by converting the energy of electrons into an acceleration voltage.

Also, when the outer electrode is composed of three or more electrodes, the voltage applied to one or more outer electrodes excluding the electrodes at both ends is preferably 10 times or less of the converted acceleration voltage.

In a preferred example of the electrostatic deflection convergence-type energy analyzer of the present invention, the deflection angle is 90°. Such an electrostatic deflection convergence-type energy analyzer may hereinafter be referred to as a "90° electrostatic deflection convergence-type energy analyzer". According to the 90° electrostatic deflection convergence-type energy analyzer of this aspect, 90° deflection and two-dimensional converging and imaging by the electrostatic field can be realized. As will be described later, particularly in spin analysis, two-dimensional convergence and image formation can be achieved in bending the traveling direction by 90° without changing the direction of the spin, and a spin-resolved two-dimensional real-space image and emission angle distribution can be obtained. Although the incident angle is not particularly limited, the incident angle may be 45°, the exit angle may be 45°, and the deflection angle may be 90°.

An electrostatic deflection convergence-type energy analyzer of the present invention may have any of the following deflection angles. By optimizing the shape, arrangement and applied voltage of each electrode, it is possible to design the energy analyzer with an arbitrary deflection angle in the range of 45° to 180°. Some examples are shown below.

- The predetermined incident angle is 22.5° and the deflection angle is 45°.
- The predetermined incident angle is 30° and the deflection angle is 60°.
- The predetermined incident angle is 60° and the deflection angle is 120°.
- The predetermined incident angle is 67.5° and the deflection angle is 135°.
- The predetermined incident angle is 75° and the deflection angle is 150°.

The incident angle is not particularly limited, and the incident angle and the exit angle may be just adjusted so that the deflection angle is 45 to 180°, such as 45°, 60°, 120°, 135°, and 150°.

In an electrostatic deflection convergence-type energy analyzer of the present invention, it is possible to control whether or not the center trajectory crosses the rotation axis, and switch the presence or absence of deflection of electrons emitted from the exit hole so that electrons of center trajectory can pass across the rotation axis at the inner electrode, by dividing the inner electrode into two parts and changing the voltage conditions applied to the electrodes.

A feature of this analyzer is that the inner electrode is separated into two parts (incident side and exit side). As an effect, electrons can pass across the rotation axis through the space created between the left and right inner electrodes. By changing the voltage condition applied to the electrodes, it is possible to switch between the case where the electrons pass through the space between the left and right inner electrodes and the case where they do not pass, thereby switching the presence or absence of deflection of the emitted electrons.

Such an electrostatic deflection convergence-type energy analyzer may hereinafter be referred to as a "deflection switching electrostatic convergence-type energy analyzer".

In an electrostatic deflection convergence-type energy analyzer of the present invention, the rotation body may be a rotation body having a rotation angle of 90° to 180°, and a compensation electrode for compensating the electric field at the cut surface may be provided. As will be described later, unless a mirror or the like is placed at the position of the exit hole to reflect the electrons, by a 180° rotation body or a rotation body having an arbitrary rotation angle, the deflection and two-dimensional convergence and imaging in the electrostatic field can be realized, even without using a 360° rotating body.

Next, an imaging-type electron spectrometer of the present invention is described.

The imaging-type electron spectrometer of the present invention is an electron spectrometer using the above-described electrostatic deflection convergence-type energy analyzer of the present invention, wherein the input lens is disposed in front of the analyzer, and wherein the projection lens and the detector are disposed in rear of the analyzer. As a result, not only the real-space image of the sample but also the two-dimensional emission angle distribution over a wide angle can be measured at once with high energy resolution.

Here, the input lens has the incident hole of the energy analyzer on the lens axis, is disposed so that the lens axis and the rotation axis of the energy analyzer form a predetermined incident angle, and accepts the electrons emitted from the sample and emits them to the incident hole. The input lens preferably has a function of switching between the angular distribution and the real-space image.

Also, the projection lens has the exit hole for the energy analyzer on the projection lens axis, and is disposed so that the projection lens axis and the rotation axis of the energy analyzer form a predetermined exit angle, and accepts from the exit hole electrons that are deflected and converged by the energy analyzer. The detector two-dimensionally detects electrons transmitted through the projection lens and measures the two-dimensional real-space image or emission angle distribution.

It should be noted that it is preferable to provide apertures or slits at the incident hole (entrance) and the exit hole (exit) of the energy analyzer.

Also, a reflection imaging-type electron spectrometer of the present invention is the electron spectrometer using the above-described electrostatic deflection convergence-type energy analyzer of the present invention (excluding 180° rotation body), wherein the exit hole of the energy analyzer is provided with an electron reflection mirror, and the incident hole of the energy analyzer is provided with a front input lens, a rear projection lens and a detector. Such an analyzer is a reflection type energy analyzer that can measure not only the real-space image of the sample but also the two-dimensional emission angle distribution over a wide angle at once with high energy resolution.

The input lens has the incident hole of the energy analyzer on the lens axis, is disposed so that the lens axis and the rotation axis of the energy analyzer form a predetermined incident angle, and accepts the electrons emitted from the sample and emits them to the incident hole.

The mirror is disposed to the exit hole of the energy analyzer so that the direction of the normal coincides with the direction of the rotation axis. A single crystal mirror can be used as the mirror, and in particular, a spin analysis function can be obtained by using an Ir (001) single crystal mirror or the like.

The projection lens has the incident hole for the energy analyzer on the projection lens axis, and is disposed so that the projection lens axis and the rotation axis of the energy analyzer form a predetermined incident angle, and accepts from the incident hole electrons that are deflected and converged by the energy analyzer, reflected by the mirror, and then deflected and converged again. The detector two-dimensionally detects electrons transmitted through the projection lens and measures the two-dimensional real-space image or emission angle distribution.

It should be noted that it is preferable to provide apertures or slits in the incident hole of the energy analyzer (which serves both as the entrance and the exit).

Next, a spin vector distribution imaging apparatus of the present invention is explained.

The spin vector distribution imaging apparatus of a first aspect of the present invention is the 90° electrostatic deflection convergence-type energy analyzer of the present invention having a deflection angle of 90° (including an energy analyzer with a rotation body having a rotation angle of 90° to 180° provided with a compensation electrode for compensating the electric field at the cut surface), and further provided with the following configurations 1a) to 1d).

1a) An input lens that has the incident hole of the energy analyzer on the lens axis, is disposed so that the lens axis and the rotation axis of the energy analyzer form a predetermined incident angle, and accepts the electrons emitted from the sample and emits them to the incident hole.
1b) An electrostatic lens that has the exit hole of the energy analyzer on the electrostatic lens axis, is disposed so that the electrostatic lens axis and the rotation axis of the energy analyzer form a predetermined exit angle, and accepts from the exit hole electrons that are deflected and converged by the energy analyzer.
1c) A two-dimensional spin filter disposed on the electrostatic lens axis at the exit side of the electrostatic lens.
1d) A projection lens that accepts the electrons reflected by the spin filter and a detector that detects the electrons transmitted through the projection lens.

Here, it is preferable to further provide the following configurations 1e) and 1f) to the above configuration.

1e) A driving means for retracting the spin filter from the electrostatic lens axis.
1f) A second projection lens that accepts electrons emitted by the electrostatic lens in a state in which the spin filter is retracted by the driving means, and a second detector that detects electrons transmitted through the second projection lens.

A spin vector distribution imaging apparatus of a second aspect of the present invention is provided with the 90° electrostatic deflection convergence-type energy analyzer of the present invention described above, and further provided with the following configurations 2a) to 2d).

2a) An input lens that has the incident hole of the energy analyzer on the lens axis, is disposed so that the lens axis and the rotation axis of the energy analyzer form a predetermined incident angle, and accepts the electrons emitted from the sample and emits them to the incident hole.

2b) A two-dimensional spin filter disposed in the exit hole of the energy analyzer and normal to the rotation axis.

2c) A projection lens that has the incident hole of the energy analyzer on the projection lens axis, is disposed so that the projection lens axis and the rotation axis of the energy analyzer form a predetermined incident angle, and accepts from the incident hole electrons that are deflected and converged by the energy analyzer, reflected by a two-dimensional spin filter, and then deflected and converged again.

2d) A detector for detecting electrons transmitted through the projection lens.

A spin vector distribution imaging apparatus of a third aspect of the present invention is the 90° electrostatic deflection convergence-type energy analyzer of the present invention described above, provided with an energy analyzer that can switch the deflection angle, and further provided with the following configurations 3a) to 3f).

3a) An input lens that has the incident hole of the energy analyzer on the lens axis, is disposed so that the lens axis and the rotation axis of the energy analyzer form a predetermined incident angle, and accepts the electrons emitted from the sample and emits them to the incident hole.

3b) An electrostatic lens that has the exit hole of the energy analyzer on the electrostatic lens axis, is disposed so that the electrostatic lens axis and the rotation axis of the energy analyzer form a predetermined exit angle, and accepts from the exit hole electrons that are deflected and converged by the energy analyzer.

3c) A two-dimensional spin filter disposed on the electrostatic lens axis at the exit side of the electrostatic lens.

3d) A first projection lens that accepts the electrons reflected by the two-dimensional spin filter and a first detector that detects the electrons transmitted through the first projection lens.

3e) A second projection lens that has the exit hole of the energy analyzer on the projection lens axis, is disposed so that the projection lens axis and the rotation axis of the energy analyzer form a predetermined exit angle, and accepts from the exit hole electrons that are converged without deflection by the energy analyzer.

3f) A second detector for detecting electrons transmitted through the second projection lens.

A spin vector distribution imaging apparatus of a fourth aspect of the present invention is the spin vector distribution imaging apparatus according to any one of the first to third aspects described above, without using the 90° electrostatic deflection convergence-type energy analyzer of the present invention described above, instead, multiple energy analyzers with deflection angles ranging from 45° to 150° were combined to provide the 90° deflection angle.

In the spin vector distribution imaging apparatus according to the first to fourth aspects of the present invention, a spin rotator that rotates the spin 90° in a plane perpendicular to each lens axis may be provided. It is disposed inside or outside at least one of the input lens and the electrostatic lens.

A spin rotator (which rotates the spin by 90° within a plane perpendicular to the lens axis) is provided in the front stage and rear stage of the 90° electrostatic deflection convergence-type energy analyzer. With this configuration, it is possible to determine which direction of spin polarization is to be analyzed among the three directions of sample in-plane and perpendicular to the plane by the ON/OFF combination of the two spin rotators. Thereby the two-dimensional analyzer for analyzing three-dimensional spin polarization with the two-dimensional real-space image and emission angle distribution can be realized.

**[Effects of the Invention]**

According to a electrostatic deflection convergence-type energy analyzer of the present invention, without using a grid, electrons are accepted in at a larger acceptance cone angle than the concentric hemispherical part of the CHA, the trajectories of the electrons are deflected and converged, and the energy resolution can be improved.

According to an imaging-type electron spectrometer of the present invention, not only the real-space image of the sample but also the two-dimensional emission angle distribution over a wide angle can be measured at once with high energy resolution.

According to a spin vector distribution imaging apparatus of the present invention, a three-dimensional spin polarization can be analyzed with a two-dimensional real-space image and emission angle distribution.

**[Brief Description of the Drawings]**

[FIG. 1] Figure 1 shows a schematic view of the electrostatic deflection convergence-type energy analyzer of Example 1.

[FIG. 2] Figure 2 shows a graph showing the aperture aberration and a graph showing the relationship between the incident angle and the exit angle of the electrostatic deflection convergence-type energy analyzer of Example 1.

[FIG. 3] Figure 3 shows an explanatory view of energy dispersion in the electrostatic deflection convergence type-energy analyzer of Example 1.

[FIG. 4] Figure 4 shows a two-dimensional real-space image of the electrostatic deflection convergence-type energy analyzer of Example 1.

[FIG. 5] Figure 5 shows an illustration of the shape of the outer and inner electrodes of the electrostatic deflection convergence-type energy analyzer.

[FIG. 6] Figure 6 shows an explanatory view of the imaging-type electron spectrometer of Example 2.

[FIG. 7] Figure 7 shows a cross-sectional view of 360° and 180° rotation type electrostatic deflection convergence-type energy analyzers.

[FIG. 8] Figure 8 shows a configuration view of the reflection imaging-type electron spectroscopy apparatus of Example 3.

[FIG. 9] Figure 9 shows a configuration view of the spin vector distribution imaging apparatus of Example 4.

[FIG. 10] Figure 10 shows a configuration view of the spin vector distribution imaging apparatus of Example 5.

[FIG. 11] Figure 11 shows an explanatory view of the switchable electrostatic deflection convergence-type energy analyzer of Example 6.

[FIG. 12] Figure 12 shows an explanatory view of the electron trajectories under other voltage conditions of the switchable electrostatic deflection convergence-type energy analyzer of Example 6.

[FIG. 13] Figure 13 shows an explanatory view of the spin vector distribution imaging apparatus of Example 7.

[FIG. 14] Figure 14 shows an explanatory view of the 90° electrostatic deflection convergence-type energy analyzer combining the energy analyzer with the deflection angle of $\beta_1$ and the energy analyzer with the deflection angle of $\beta_2$ (Example 8).

[FIG. 15] Figure 15 shows an explanatory view of a combination for realizing the 90° electrostatic deflection convergence-type energy analyzer (when $\beta_1 = \beta_2$).

[FIG. 16] Figure 16 shows an explanatory view of combination conditions for realizing the 90° electrostatic deflection convergence-type energy analyzer, (a) when $\beta_1 = \beta_2$, (b) when $\beta_1 \neq \beta2$.

[FIG. 17] Figure 17 shows an explanatory view of the electrostatic deflection convergence-type energy analyzer with deflection angles of 45° and 60°.

[FIG. 18] Figure 18 shows an explanatory view of a two-stage combination electrostatic deflection convergence-type energy analyzer, (a) a combination of two 45° electrostatic deflection convergence-type energy analyzers, (b) a combination of two 60° electrostatic deflection convergence-type energy analyzers.

[FIG. 19] Figure 19 shows an explanatory view of the electrostatic deflection convergence-type energy analyzer with deflection angles of 120°, 135° and 150°.

[FIG. 20] Figure 20 shows a schematic view of a conventional concentric hemispherical analyzer (CHA).

[FIG. 21] Figure 21 shows a graph showing aperture aberration of the CHA.

[FIG. 22] Figure 22 shows a point source image of concentric hemispherical part of the CHA.

[FIG. 23] Figure 23 shows a schematic view of a conventional concentric cylindrical mirror analyzer (CMA).

[FIG. 24] Figure 24 shows a graph showing aperture aberration of the CMA.

[FIG. 25] Figure 25 shows a schematic view of a conventional VLEED detector.

[FIG. 26] Figure 26 shows a schematic view of conventional spin-resolved electron spectroscopy.

[FIG. 27] Figure 27 shows a schematic view of another conventional spin-resolved electron spectroscopy.

[FIG. 28] Figure 28 shows a schematic view of the spin polarization analyzer using a 90° spherical deflector.

[FIG. 29] Figure 29 shows an explanatory view of an improved 90° deflector.

[FIG. 30] Figure 30 shows a combination of 90° spherical deflector and lens.

[FIG. 31] Figure 31 shows an explanatory view of spin rotation by multipole Wien filter.

[FIG. 32] Figure 32 shows an explanatory view of the electrostatic deflection convergence-type energy analyzer of Example 9.

[FIG. 33] Figure 33 shows an explanatory view of the electrostatic deflection convergence-type energy analyzer of Example 10.

[FIG. 34] Figure 34 shows an explanatory view of the electrostatic deflection convergence-type energy analyzer of Example 11.

[FIG. 35] Figure 35 shows a graph showing the aperture aberration of the electrostatic deflection convergence-type energy analyzer of Example 11.
[FIG. 36] Figure 36 shows an explanatory view of the electrostatic deflection convergence-type energy analyzer of Example 12.

**[Best Mode for Carrying Out the Invention]**

First, the basic structures and measurement principles of conventional CHA and CMA, which are standard energy analyzers for photoelectron spectroscopy and Auger electron spectroscopy, will be described. After that, an electrostatic deflection convergence-type energy analyzer of the present invention will be described in comparison with those analyzers. Also, the structure of the conventional spin polarization analyzer will also be described below, and the feature of the present invention will be clarified by comparing it with the spin vector distribution imaging apparatus of the present invention.

(1) Concentric hemispherical analyzer (CHA)

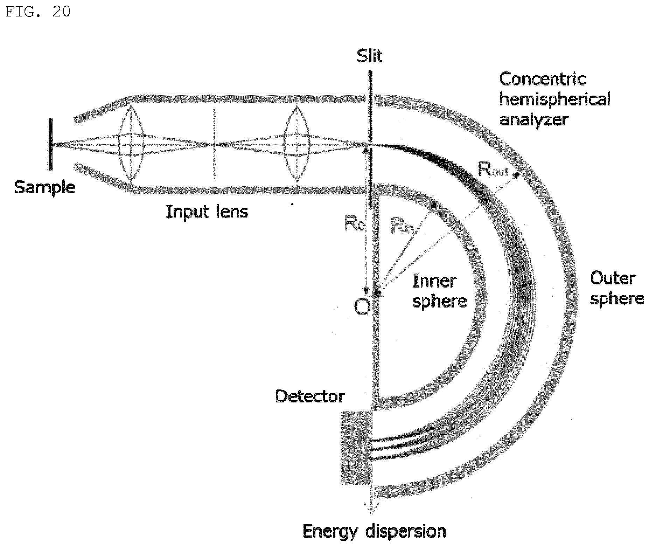

The CHA, as shown in FIG. 20, is provided with an input lens that accepts and converges electrons (or charged particles) emitted from the sample; a concentric hemispherical part consisting of an inner sphere and an outer sphere; a slit disposed at the entrance of the concentric hemispherical part; and a detector disposed at the exit of the concentric hemispherical part, and is an analyzer that utilizes the convergence effect of the spherically symmetric electric field. Assuming that the distance from the center O of the sphere of the concentric hemispherical part to the central axis (optical axis) of the input lens is $R_0$ as shown in FIG. 20, in the case of an ideal spherically symmetric electric field, the potential at an arbitrary point (distance r from O) between the inner and outer spheres is given by Equation (1) below.
Here, Epass is the pass energy of the concentric hemispherical part, $V_0$ is the potential at $r = R_0$, and e is the elementary charge. The coefficient of the first term of the equation (1) is a coefficient determined from the condition of the balance between the centrifugal force and the central force on the center trajectory. The central trajectory refers to an electron trajectory with energy $E_k = E_{pass}$ that enters the concentric hemispherical part perpendicularly from the optical axis of the input lens. If the centrifugal force is stronger than the central force (i.e., $E_k > E_{pass}$), the trajectory is deflected outward, and if the central force is stronger (i.e., $E_k < E_{pass}$), the trajectory is deflected inward. The electron beam of $E_k = E_{pass}$ that has passed through the entrance slit changes its direction by 180° with its central trajectory describing a circular trajectory, converges at the exit position, and is detected by the detector. The convergence points of electrons with $E_k$ slightly higher than $E_{pass}$ shifts away from the center O, and the convergence point of electrons with $E_k$ slightly lower than $E_{pass}$ shifts toward the center O. Thus, the detector provided at the exit of the concentric hemispherical part provides energy dispersion in the direction shown in FIG. 20. Also, a one-dimensional real-space image or emission angle distribution is obtained normal to the paper surface.
In the schematic view of FIG. 20, the image plane is formed at the entrance slit position. In this case, the one-dimensional real-space image is obtained in a direction normal to the paper surface of the detector. When a diffractive surface is formed at the position of the entrance slit by switching the voltage applied to the input lens, the one-dimensional emission angle distribution is obtained in a direction normal to the paper surface of the detector. Thus, the one-dimensional real-space image or angular distribution is selected by the entrance slit of the concentric hemispherical part, and the one-dimensional real-space image or emission angle distribution with energy dispersion can be acquired by the detector provided at the exit of the concentric hemispherical part. Also, when the energy is adjusted to the sharp photoelectron peak from the inner shell level, the electrons incident on the concentric hemispherical part have substantially a single energy. Therefore, it is possible to widen the entrance slit to allow the two-dimensional real-space image or angular distribution to be incident and to display the image on the screen of the detector.
[Equation 2]

$$ V(r) = \frac{2E_{\mathrm{pass}}}{e}\left(\frac{R_0}{r} - 1\right) + V_0 \qquad (1) $$

Hereinafter, the characteristics of the concentric hemispherical part will be specifically indicated by numerical values. First, how much voltage is applied to the inner and outer spheres of the concentric hemispherical part will be shown. While the radii Rin and Rout of the inner and outer spheres (see FIG. 20) and the central orbital radius $R_0$ are determined by the design of the analyzer, the pass energy $E_{pass}$ and the central orbital potential $V_0$ are determined according to the measurements. Once $E_{pass}$ and $V_0$ are determined, the voltages applied to the inner sphere and outer sphere are determined by the above equation (1). $V_0$ is set to the same potential as the exit electrode of the input lens, and changes with changes in the deceleration ratio of the input lens (that is, changes in $E_{pass}$) or changes in energy to be analyzed. In FIG. 20, the radii of the inner sphere and outer sphere are $R_{in}$ = 0.75$R_0$ and $R_{out}$ = 1.25$R_0$. In this case, the voltages $V_{in}$ and $V_{out}$ applied to the inner sphere and the outer sphere are given by the following equations (2) and (3), respectively. Assuming that $E_{pass}$ is 1000 eV for simplicity and $V_0$ is taken as a reference, the voltages applied to the inner sphere and outer sphere are approximately 667 V and -400 V, respectively. If the electron energy (here, the pass energy $E_{pass}$) is divided by the elementary charge e (that is, converted to acceleration voltage) is called the converted acceleration voltage, the absolute values of the voltages applied to the inner sphere and outer sphere are approximately 0.67 and 0.4 times the converted acceleration voltage, respectively.

[Equation 3]

$$V_{in} = 0.6667 E_{pass}/e + V_0 \qquad (2)$$

[Equation 4]

$$V_{out} = -0.4 E_{pass}/e + V_0 \qquad (3)$$

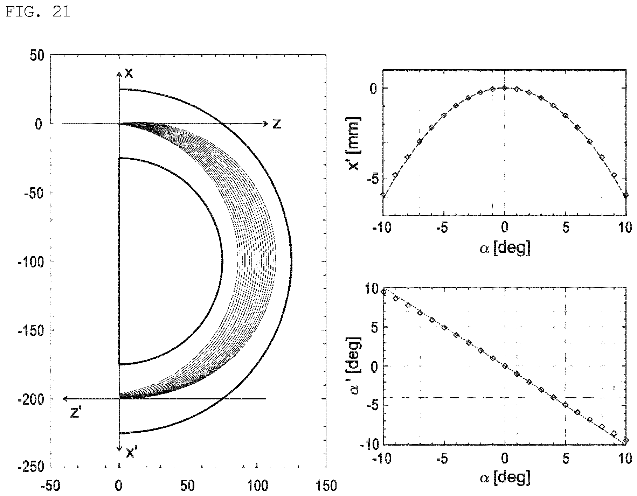

The electron trajectory in the concentric hemispherical part shown in FIG. 20 is the trajectory when the incident angle $\alpha$ to the concentric hemispherical part is limited to $\pm 3°$. To obtain high convergence at the exit of the concentric hemispherical part, it is necessary to keep the incident angle $\alpha$ narrow. The left panel in FIG. 21 shows the results of trajectory calculation with the incident angle $\alpha$ expanded to $\pm 8°$. Here, the center orbit radius R0 is set to 100 mm. The upper right graph in FIG. 21 shows the aperture aberration, and the lower right graph shows the relationship between the incident angle $\alpha$ and the exit angle $\alpha'$. According to theoretical calculation, the aperture aberration of the concentric hemispherical part is given by the following equation (4).

[Equation 5]

$$A(\alpha) = -2R_0\alpha^2 + O(\alpha^4) \qquad (4)$$

Here, $O(\alpha^4)$ is a collection of higher-order terms of $\alpha$. FIG. 21 shows an aberration curve (broken line) approximated only by the first term on the right side of the above equation (4) together with the calculation result of the aperture aberration (including higher-order terms). Both agree well up to an incident angle of $\pm 7°$ (=0.12 rad). The coefficient (-2$R_0$) of $\alpha^2$ in equation (4) is an aperture aberration coefficient (hereinafter referred to as $C_A$), and in the case of FIG. 21, $C_A$ = -2$R_0$ = -200. As shown in FIG. 21, the aperture aberration of the concentric hemispherical part increases with the square of $\alpha$, and when $\alpha$ = 4°, the aberration of about 1 mm occurs for $R_0$ = 100 mm. Thus, unless the incident angle is sufficiently limited, a large aperture aberration occurs, making it difficult to obtain the two-dimensional real-space image. Also, as will be shown below, in order to obtain high energy resolution, the aperture aberration must be suppressed by narrowly limiting the incident angle.

An estimate of the full width at half maximum (FWHM) energy resolution of the concentric hemispherical part is given by equation (5) below.

[Equation 6]

$$\frac{\Delta E}{E} = \alpha_{max}^2 + \frac{w}{2R_0} \qquad (5)$$

Here, $\alpha$max is the maximum incident angle on the concentric hemispherical part and w is the width of the entrance and exit slits. The energy resolution defined by the above equation (5) represents the energy width of FWHM that can be separated when the electrons incident from the region of width w are cut off by the region of width w. If the intensity of the electrons with the energy $E_{pass}$ incident on the concentric hemispherical part is strong, the slit width can be reduced to suppress the contribution of the slit width to the energy resolution. Otherwise, the decrease in the electron intensity is a hindrance, and the slit width cannot be made sufficiently narrow. Therefore, in many analyzers, the energy resolution is improved by increasing the central orbital radius $R_0$. To what extent the slit width can be reduced depends on the spot size or flux of the X-ray or electron beam irradiated to the sample and the magnification of the input lens.

In the current photoelectron spectrometer and Auger electron spectroscopy, the spot size of X-rays and electron beams on the sample can be about 10 to 100 $\mu$m, but here it is set to 50 um, which is slightly larger. Assuming that the magnification of the input lens is 5, the magnification of the concentric hemispherical part is 1, so it seems appropriate to set the slit width to 0.25 mm. In this case, the contribution of the second term on the right side of the equation (5) is $1/(8 \cdot R_0)$. This contribution amounts to $0.125 \times 10^{-2}$ when $R_0 = 100$ mm and $0.0625 \times 10^{-2}$ when $R_0 = 200$ mm. The first term on the right side of the equation (5) can be suppressed small by limiting the incident angle $\alpha_{max}$. However, in this case, a significant decrease in intensity is unavoidable. For example, if $\alpha_{max} = \pm 3°$ is changed to $\pm 1°$, the intensity drops to about 1/9.

Table 1 below shows the values of the energy resolution of the concentric hemispherical part calculated using the first term on the right side of the equation (5) when $\alpha_{max}$ is set to $\pm 2°$ to $\pm 8°$. It can be seen that in order to obtain high energy resolution while avoiding a significant decrease in intensity, it is necessary to set the incident angle $\alpha_{max}$ to the concentric hemispherical part to about $\pm 2$ (or $\pm 3°$).

[Table 1]

| $\alpha_{max}$ | $\pm 2°$ | $\pm 3°$ | $\pm 4°$ | $\pm 5°$ | $\pm 6°$ | $\pm 7°$ | $\pm 8°$ |
|---|---|---|---|---|---|---|---|
| $\Delta E/E$ [$10^{-2}$] | 0.122 | 0.274 | 0.487 | 0.762 | 1.097 | 1.493 | 1.950 |

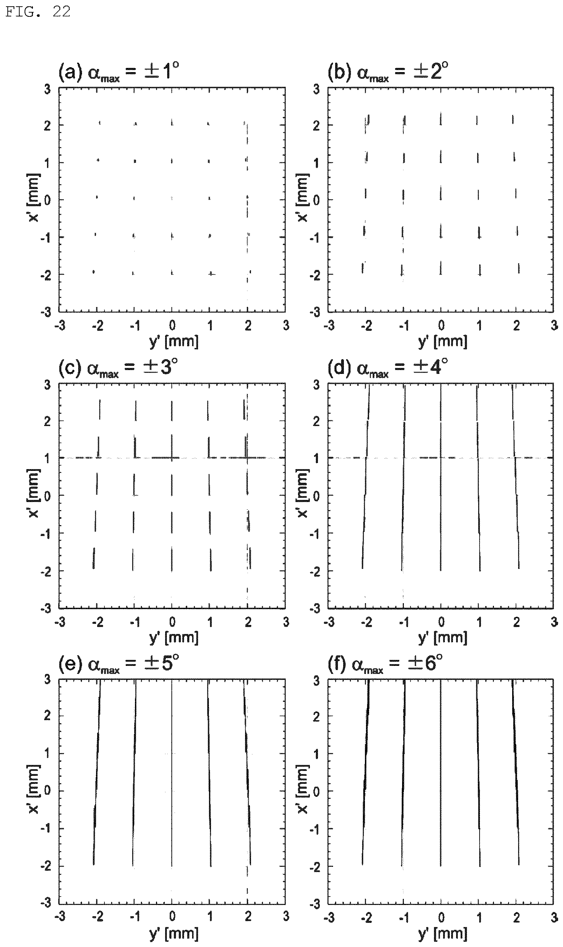

FIG. 22 shows the two-dimensional real-space image obtained at the exit of the concentric hemispherical part when electrons of energy $E_{pass}$ are incident, assuming point sources of $5 \times 5$ (1 mm pitch) on the incident surface to the concentric hemispherical part, over the cone angle range of the incident angle $\alpha_{max}$ with normal to the surface as the center direction from each point. The $\alpha_{max}$ is considered from $\pm 1°$ to $\pm 6°$. Here, the coordinate x' is taken in the direction shown in FIG. 21, and the coordinate y' is taken normal to the paper surface. As the $\alpha_{max}$ increases, the aperture aberration increases and the spatial resolution in the x' direction significantly decreases. If the $\alpha_{max}$ is about $\pm 2°$ or less, it seems that a relatively good real-space image can be obtained. However, when the $\alpha_{max}$ is set to about $\pm 4°$ or more, two point sources separated by 1 mm are connected in the real-space image and cannot be resolved. In order to obtain the two-dimensional real-space image with high spatial resolution at the exit of the concentric hemispherical part, it seems necessary to limit the incident angle to the concentric hemispherical part to $\pm 1°$ or $\pm 2°$ or less. However, if the incident angle is limited to about $\pm 1°$ or less, there is a problem that the intensity of photoelectrons is significantly reduced.

(2) Concentric cylindrical mirror analyzer (CMA)

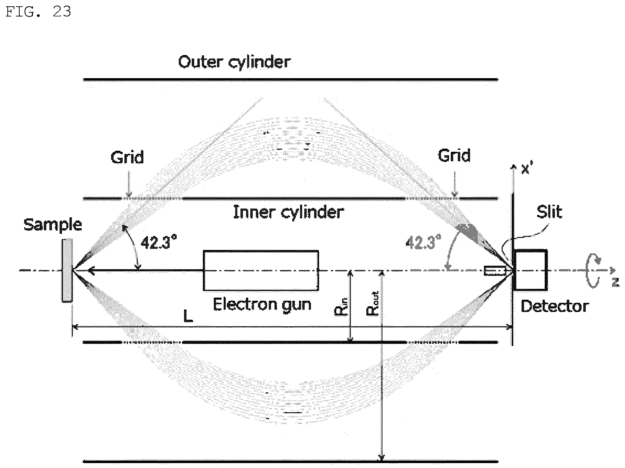

As shown in FIG. 23, the CMA consists of a coaxial cylindrical part consisting of an inner cylinder and an outer cylinder, a slit and a detector provided at the rear stage of the coaxial cylindrical part, and is an analyzer that utilizes the convergence effect of the cylindrically symmetrical electric field. Here, the entrance of the inner cylinder into which electrons enter and the exit from which electrons exit is a cylindrical grid, which allows electrons to pass through without breaking the cylindrically symmetrical electric field.

In the case of an ideal cylindrically symmetric electric field, the potential at an arbitrary point (distance r from the central axis z) between the inner and outer cylinders of the CMA is expressed by the following equation (6).
[Equation 7]

$$V(r) = -\frac{E_{pass}}{eK} \ln \frac{r}{R_{in}} \qquad (6)$$

Here, $E_{pass}$ is the CMA pass energy, $R_{in}$ is the inner cylinder radius, and e is the elementary charge. K is a parameter that determines the electric field strength, and is set to K = 1.31 in FIG. 23. Since the inner cylinder is normally set to ground potential, $r = R_{in}$ and $V(r) = 0$ in the equation (6). When setting an arbitrary potential to the inner cylinder, the potential can be added to the equation (6). In FIG. 23, the ratio of the radius of the outer and inner cylinders is 2.66. In this case, the voltage applied to the outer cylinder is approximately -746 V for $E_{pass} = 1000$ eV from the equation (6). Assuming that the electron energy $E_{pass}$ divided by the elementary charge e is the converted accelerating voltage, the absolute value of the voltage applied to the outer cylinder is approximately 0.75 times the converted accelerating voltage. The voltage applied to the inner cylinder is 0 times the converted acceleration voltage. The central trajectory is an electron with energy $E_k = E_{pass}$ that enters a cylindrically symmetrical electric field from the origin on the sample (the intersection of the central axis z and the sample surface) with at an angle of $\theta = 42.3°$ from the central axis z of the CMA.

The incident angle to the cylindrically symmetrical electric field of an arbitrary trajectory is measured from the central axis z and expressed as $\theta = 42.3° + \alpha$, where $\alpha$ is the incident angle. The electron incident on the cylindrically symmetric electric field receives a force directed toward the central axis z and changes direction. Then, the bundle of electron trajectories of $E_k = E_{pass}$ passes through the exit grid with the central trajectory forming an angle of 42.3° with the central axis z and converges at the slit position. Although not shown, the convergence point moves to the right when $E_k > E_{pass}$ and to the left when $E_k < E_{pass}$, and electrons cannot pass through the slit when $E_k$ is shifted by the energy resolution.

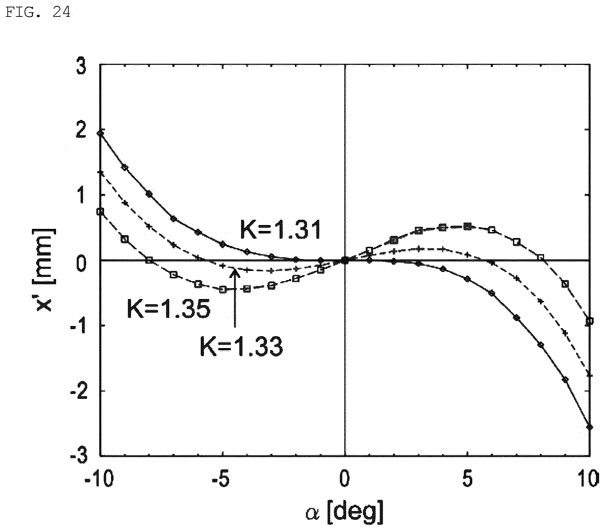

FIG. 24 shows the relationship between the incident angle $\alpha$ and the aperture aberration when the distance L between the origin on the sample and the point where the central orbit intersects the z-axis is 275 mm (When L is set to 275 mm, the length of the center trajectory from the origin to the slit position substantially matches the length of the center trajectory of the concentric hemispherical part shown in FIG. 21). In addition to K = 1.31, FIG. 24 also shows results for K = 1.33 and K = 1.35. However, when K = 1.33, L = 279 mm, and when K = 1.35, L = 283 mm. When K = 1.31, $\alpha = 0°$ is the stationary point, near which the aberration is almost zero. Therefore, if it is desired to minimize the aberration, K should be chosen to be 1.31 to limit the incident angle. Conversely, if it is desired to increase the acceptance cone angle even if convergence is sacrificed, K should be set to a value slightly larger than 1.31 (for example, about 1.33). The value of K can be easily changed by the voltage applied to the outer cylinder. Note, however, that as the value of K changes, so does the value of L, as described above. In other words, when the value of L changes, there is a problem that the optimal slit and detector positions change.

As can be seen by comparing the aperture aberrations shown in FIGS. 21 and 24, the cylindrically symmetrical electric field used in CMA has a stronger convergence effect than the spherically symmetrical electric field used in CHA. This is because the CMA has a third-order aperture aberration, whereas the CHA has a second-order aperture aberration. As a result, the CMA is expected to have a high energy resolution, but the CMA has not actually achieved the high energy resolution like that obtained with the CHA. The reason for not achieving is that two grid electrodes are used in the CMA, and the electrons are scattered by the grid at the entrance and exit of the cylindrically symmetric electric field, resulting in poor convergence. Thus, it is difficult with the CMA to achieve the high energy resolution that is obtained with the CHA. In the CMA, it is also difficult to obtain a high-resolution real-space image and emission angle distribution due to the scattering effect of the grid.

(3) Conventional spin polarization analyzer

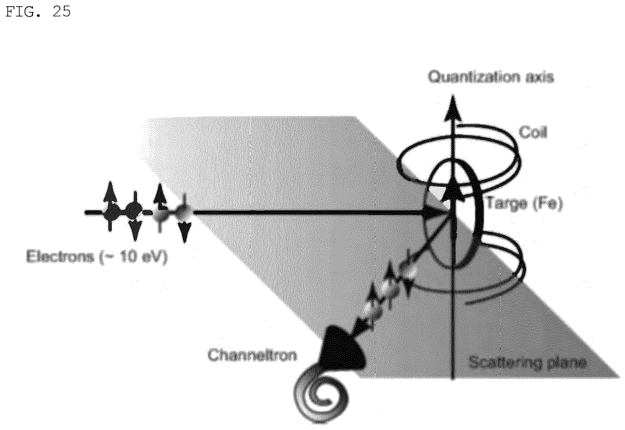

Typical spin polarization analyzers include Mott detectors and SPLEED detectors using spin-orbit interaction, and VLEED detectors using spin-exchange interaction. Also, in recent years, the two-dimensional spin analyzer using an Ir (001) single crystal substrate has been developed (Non-Patent Document 10). FIG. 25 is a schematic view of the VLEED detector (Non-Patent Document 11). This spin polarization analyzer is a detector that utilizes the fact that, when low-energy electrons are incident on a target magnetized by a coil, the intensity of the reflected electrons changes depending on whether the electron spin is parallel or antiparallel to the magnetization of the target. An iron thin film is used as the target.

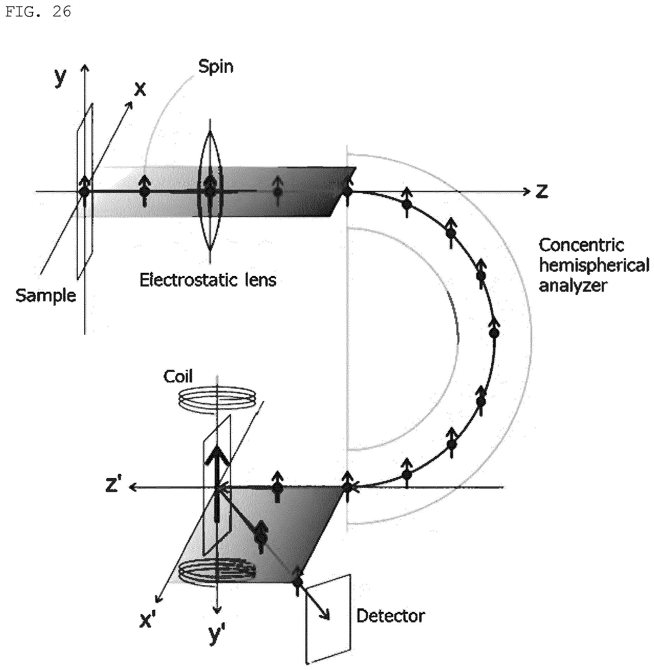

FIG. 26 is a schematic view of the spin polarization analyzer that combines the CHA and the VLEED. z and z' are the optical axes between the sample and the concentric hemispherical part and between the concentric hemispherical part and the target, respectively.
y, y' are axes in the direction connecting the center and the entrance or exit of the concentric hemispherical part, and x, x' are axes perpendicular to z, y and z', y', respectively. Since the CHA consists only of the electric field, the direction of the spin does not change even if the electron passes through the CHA.

In the spin polarization analyzer shown in FIG. 26, a coil is provided in the y' direction and the spin polarization in the y direction within the sample surface can be measured. When the spin polarization in the x direction is also to be measured using the spin polarization analyzer of FIG. 26, the sample may be rotated by 90° in the in-plane direction, but the rotation of the sample causes even a slight shift in the measurement area. This can be a fatal problem in micro-area analysis. As a method of avoiding such a problem, it is effective to provide the spin rotator that rotates the spin by 90° in a plane perpendicular to the lens axis in the input lens or in front of the spin analyzer.

As a result, the spin in the in-plane direction of the sample can be rotated by 90° without rotating the sample. Also, in the case of the spin polarization analyzer using the VLEED, instead of the spin rotator, coils for magnetizing the target are provided in two directions, and by switching the magnetization direction, the spin polarization in the x direction and the y direction in the sample surface can be measured. However, none of the above methods can measure spin polarization in the z direction. An effective method for measuring the spin polarization in the z direction is to bend the electron trajectory by 90° with the electric field before the electron enters the target.

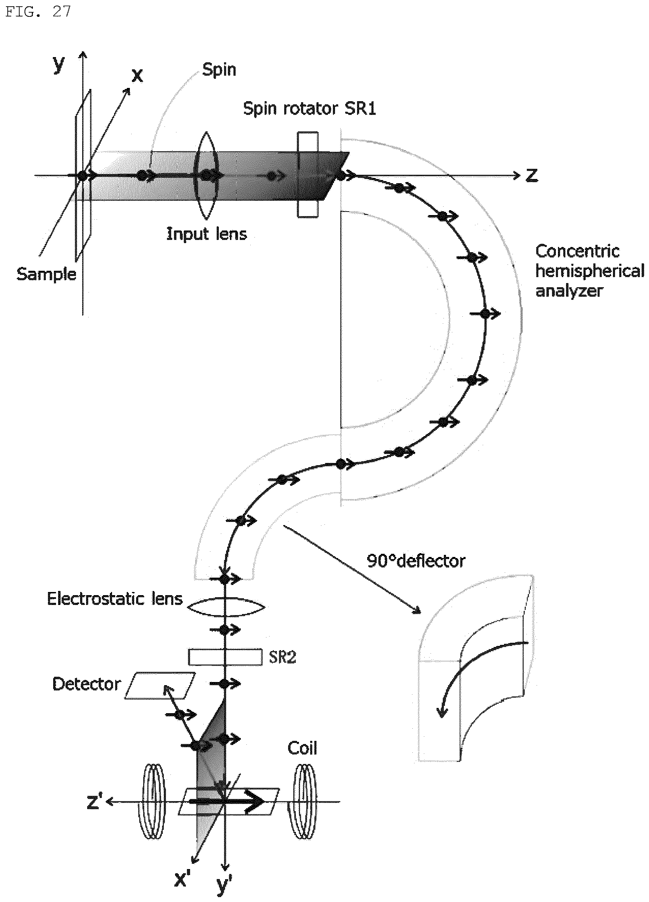

FIG. 27 is a schematic view of the spin polarization analyzer for spin analysis in such a manner. Here, the electron trajectory is bent by 90° in the z'y' plane, which makes it possible to measure the spin polarization normal to the sample surface (z direction). As a method of bending the electron trajectory by 90°, a 1/4 cylindrical electrostatic 90° deflector (90° deflector) as shown in FIG. 27 is used.

To measure the spin polarization in the x and y directions without rotating the sample, the spin rotators are disposed respectively between the input lens and the concentric hemispherical part, and the 90° deflector and the spin analyzer as in FIG. 27. In FIG. 27, both of two spin rotators (SR1, SR2) are set to OFF. When SR1 is set to OFF and SR2 is set to ON, the spin polarization in the x direction in the sample surface can be measured, and when both SR1 and SR2 are set to ON, the spin polarization in the y direction in the sample surface can be measured. In the case of the spin analyzer using the VLEED, a coil may be added in the x' direction instead of providing the second spin rotator SR2. Three-dimensional spin polarization can be measured by the above method.

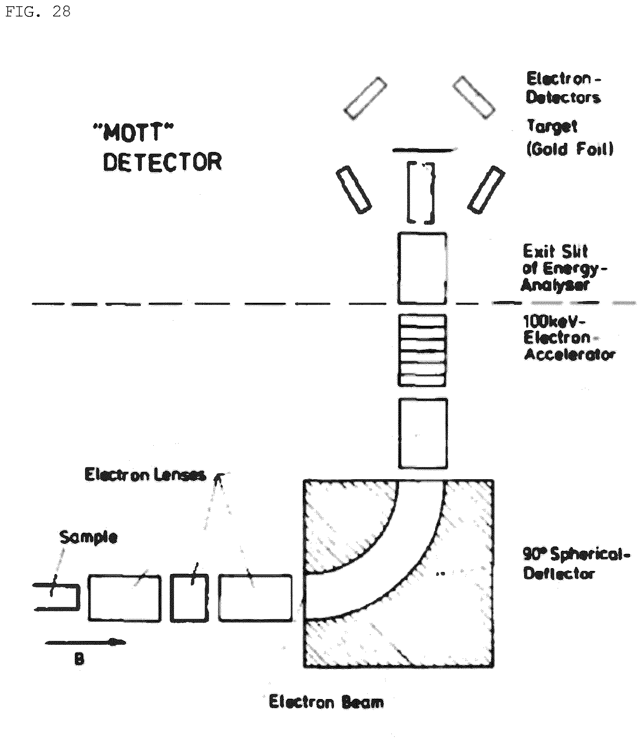

In the 90° deflector, electrons are deflected by 90° in a circular arc under the condition that the central force and the centrifugal force due to the cylindrical electric field are balanced. A 90° deflection can also be achieved using the spherically symmetric electric field instead of the cylindrical electric field. FIG. 28 is a schematic view of a spin polarization analyzer using a 90° spherical deflector. The 90° deflector or the 90° spherical deflector has a simple structure and is suitable for bending a parallel beam by 90°. However, these deflectors cannot converge an angularly spread beam emanating from a single point. In the case of the cylindrical electric field, there is a convergence effect within the deflection plane, but not in the direction perpendicular to it. Also, the convergence effect within the deflection plane converges the beam emitted from one point at a deflection angle of 127°, and a deflector with a deflection angle of 90° cannot provide a sufficient convergence effect. In the spherically symmetric electric field, there is a convergence effect not only in the deflection plane but also in the direction perpendicular to it, but a beam emitted from one point converges at a deflection angle of 180° and diverges at the deflection angle of 90°.

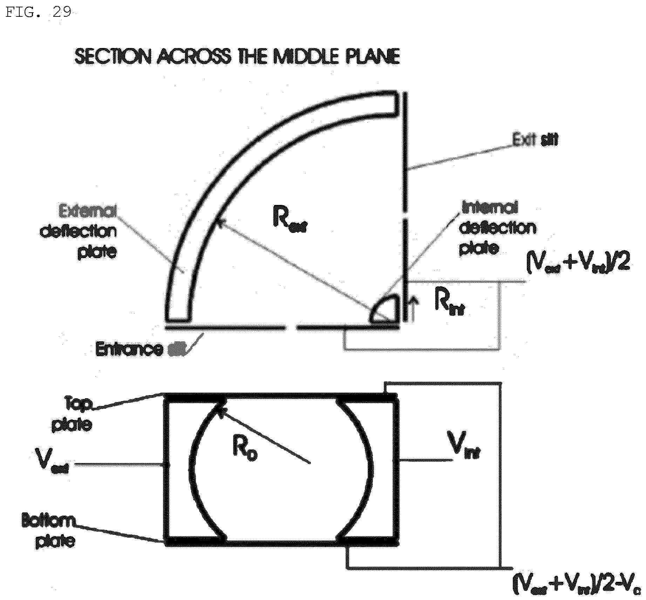

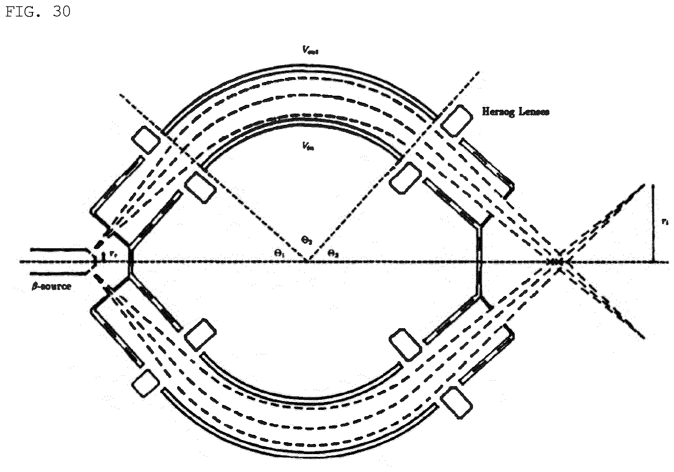

FIG. 29 is a schematic cross-sectional view of an improved 90° deflector. According to the improved 90° deflector, an electron beam emitted from one point can be deflected by 90° within the deflection plane and converged. However, with this method, the beam cannot be converged simultaneously in two directions, i.e., the direction within the deflection plane and the direction perpendicular thereto. In the case of the 90° spherical deflector, it is possible to narrow the spread beam by combining a lens at the exit as shown in FIG. 30. However, even with this method, beams cannot be converged in two directions at the same time.

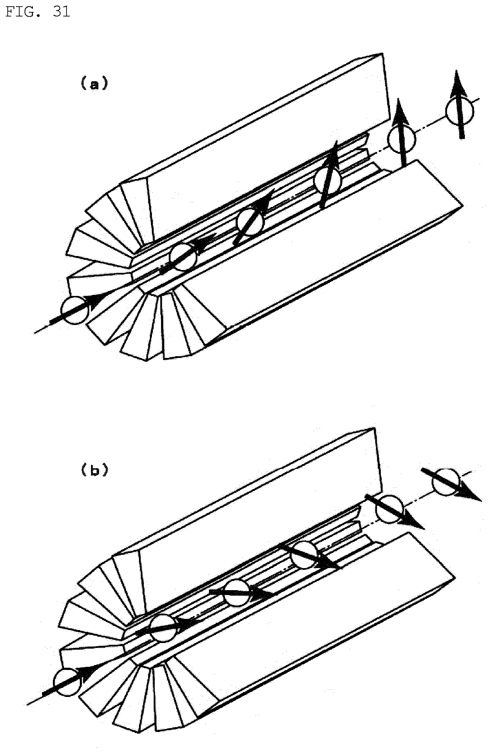

The 90° deflection analyzer shown in FIGS. 27 to 30 can be used for three-dimensional measurements of spin polarization, but instead of using such a deflection analyzer, a Wien filter-type spin rotator can be used for the three-dimensional measurements of spin polarization. In the Wien filter-type spin rotator, the spins perpendicular to the sample surface can be rotated by 90° and tilted in the in-plane direction without changing the direction of the beam, and as shown in FIG. 31, a multipole Wien filter allows three-dimensional manipulation of the spins. However, even this method does not achieve two-dimensional convergence of a beam with an angular spread at the same time as the 90° spin rotation.

The conventional concentric hemispherical analyzer (CHA), the conventional concentric cylindrical mirror analyzer (CMA), and the conventional spin-resolved electron spectroscopy have been described above. In the following some examples of embodiments of the invention will be described in detail with reference to the drawings. The scope of the present invention is not limited to the following examples and illustrated examples, and many modifications and variations are possible.

**[Example 1]**

(90° electrostatic deflection convergence-type energy analyzer)

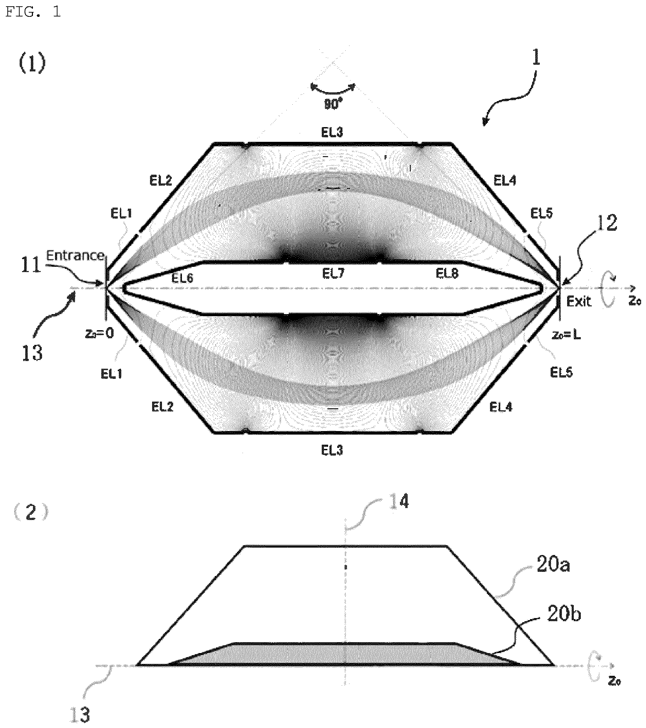

FIG. 1(1) is a schematic view of Example 1 of the 90° electrostatic deflection convergence-type energy analyzer of the present invention. The 90° electrostatic deflection convergence-type energy analyzer 1 has five outer electrodes EL1, EL2, EL3, EL4, EL5 and three inner electrodes EL6, EL7, EL8 disposed along the shape of two rotation bodies formed inside and outside with a rotation axis 13 in common, and an electron incident hole 11 and an electron exit hole 12 are formed on respective rotation axis 13 of the electrodes at both ends of the outer electrode. The inner surface shape of the outer electrode has a tapered shape with a smaller diameter toward the incident hole 11 and the exit hole 12 except for the central electrode (EL3), and the outer surface shape of the inner electrode has a tapered shape with a smaller diameter toward the incident hole 11 and the exit hole 12 except for the center electrode (EL7). If the position in the direction of the rotation axis is represented by $z_o$, the entrance of the energy analyzer 1 is $z_o = 0$, and the exit is $z_o = L$, then the outer electrode and the inner electrode are symmetrical with respect to the central plane 14 at $z_o = L/2$.

As shown in FIG. 1(2), the energy analyzer 1, along the three-dimensional surface shape of the two rotation bodies obtained by rotating the lower bases of two isosceles trapezoids (20a, 20b) with different heights on the rotation axis 13, has five outer electrodes EL1, EL2, EL3, EL4, EL5 and three inner electrodes L6, EL7, EL8. A voltage for accelerating and decelerating electrons is applied to the outer electrode and the inner electrode in proportion to the energy of the incident electrons. In particular, one or a plurality of electrodes except for the inner electrodes at both ends have set thereto a voltage that is three times or more a converted acceleration voltage obtained by converting the energy of electrons into an acceleration voltage with reference to the potential of the outer electrode having the incident hole 11 formed therein. So that the central trajectory of electrons is at a predetermined incident angle (45° in FIG. 1) with the rotation axis 13, and so that the central trajectory of electrons incident from the incident hole 11 converges at the position of the exit hole 12 at a predetermined exit angle (45°) with the rotation axis 13, the voltage applied to each electrode is adjusted. By this, it becomes possible to accept electrons with an angular spread, deflect them by 90°, and converge them two-dimensionally.

FIG. 1(1) shows electron trajectories and equipotential lines in addition to the schematic shape of the electrodes. Electrons emitted from $z_0 = 0$ are first accelerated by a gentle electric field, then change direction while being accelerated by a strong electric field, become parallel to the rotation axis $z_0$ around $z_0 = L/2$, then change direction while being decelerated and converge at the exit position.

Electrons on the central orbit enter at an incident angle of 45° and reach the convergence point at an exit angle of 45°. The central trajectory is thus turned 90° by the electric field. Assuming that the incident angle measured from the central orbit is $\alpha$, electron trajectories at intervals of 1° from $\alpha = -8°$ to $+8°$ are shown in FIG. 1(1). The sample can be disposed on the plane of $z_0 = 0$ as shown in FIG. 1(1), or can be disposed on the sample plane by using the input lens as described later. When the sample is disposed on the plane of zo = 0, the electron beam or light is irradiated through a hole (not shown) made in the inner electrode or the outer electrode. Here, it is also possible to dispose an electron gun in the inner electrode.

Also, although not shown in FIG. 1(1), a slit for energy selection is disposed at the exit position, and a detector is disposed at the subsequent stage. When the sample is disposed on the plane of $z_0 = 0$, high energy resolution is only obtained for analysis in the low-energy region, but a large acceptance cone angle due to axial symmetry and thus high sensitivity are expected.

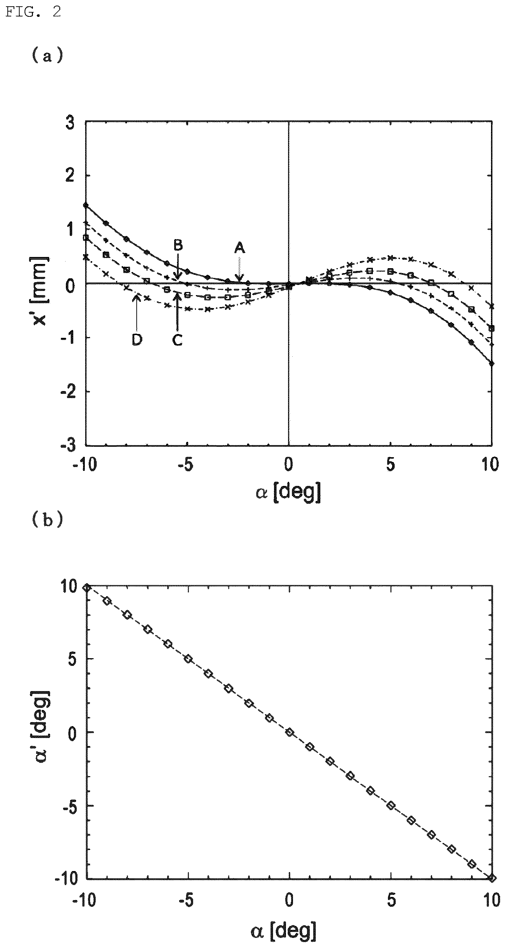

FIG. 2(a) is a graph showing the aperture aberration of the 90° electrostatic deflection convergence-type energy analyzer of FIG. 1(1). Here, the length L of the analyzer is set to 275 mm (in this case, the length of the central trajectory approximately matches the length of the central trajectory of the concentric hemispherical part of the CHA shown in FIG. 21). A, B, C, and D shown in a graph of FIG. 2(a) are, respectively, the results of adjusting the voltage applied to each electrode (EL1 to EL8) so that the image blur due to the aperture aberration is reduced when the range of the incident angle $\alpha$ (acceptance cone angle) of the energy analyzer is set to $\pm2°$, $\pm6°$, $\pm8°$, $\pm10°$. The image blur due to aperture aberration is greatly reduced compared to the case of the CHA shown in FIG. 21. Also in the CMA, as shown in FIG. 24, by adjusting the applied voltage according to the acceptance cone angle, it is possible to minimize the image blur due to aperture aberration. However, in this case, the difficulty is that the convergence position changes.

In the energy analyzer of the present invention, the applied voltage can be optimized without changing the convergence position. Also, the image blur due to aperture aberration can be reduced to the same level as the CMA or less. Importantly, the energy analyzer of the present invention, unlike the CMA, does not use a grid electrode. It is desirable not to use the grid electrode in the energy analyzer with an imaging function, because the trajectory of electrons is disturbed when electrons pass through the grid electrode.

FIG. 2(b) shows the relationship between the incident angle and the exit angle when the acceptance cone angle is $\pm10°$. In the CHA, as shown in FIG. 21, the difference between the absolute values of the incident angle and the exit angle becomes significant from around $\alpha = \pm5°$, but in the energy analyzer of the present invention, the absolute values of the incident and exit angles are approximately the same, i.e., the angles are conserved, over all acceptance cone angles. Thus, the energy analyzer of the present invention is suitable for angular distribution measurements. For A to D, the adjusted voltages are shown in Table 2 below. However, the values shown here are voltage values for pass energy $E_{pass} = 1000$ eV. Values for other pass energies are obtained by varying the values in Table 2 proportional to $E_{pass}$. Also, although Table 2 shows voltage values when the electrode EL1 is set to the ground potential, EL1 may be a potential V1 ($\neq0$) other than the ground potential. In this case, voltages obtained by adding V1 to the voltages shown in Table 2 are applied to the electrodes other than EL1. In A to D, the electrodes EL1 and EL5 are set to the ground potential, EL2, EL4, EL6 and EL8 are set to the same potential, and only the voltages of EL3 and EL7 are adjusted.

Assuming that the electron energy $E_{pass}$ is divided by the elementary charge e as the converted accelerating voltage, EL3 is applied a voltage about 3 to 4 times the converted accelerating voltage, and EL7 is applied a voltage about 23 to 25 times the converted accelerating voltage. Compared with the voltages applied to the CHA and the CMA described above, the voltages applied to EL3 and EL7 are higher by one or two orders of magnitude. The optimum voltage applied to each electrode varies depending on the shape and arrangement of the electrodes. As a result, a voltage approximately 0 to 10 times the converted acceleration voltage is applied to EL3, and a voltage approximately 10 to 50 times the converted acceleration voltage is applied to EL7. However, when high convergence performance is not required, the voltage applied to EL7 may be 3 to 5 times or more and 10 times or less of the converted acceleration voltage.

[Table 2]

|   | Voltage(V) @EL1 | Voltage(V) @EL2 | Voltage(V) @EL3 | Voltage(V) @EL4 | Voltage(V) @EL5 | Voltage(V) @EL6 | Voltage(V) @EL7 | Voltage(V) @EL8 |
|---|---|---|---|---|---|---|---|---|
| A | 0 | 180 | 4480 | 180 | 0 | 180 | 24750 | 180 |
| B | 0 | 180 | 4350 | 180 | 0 | 180 | 24310 | 180 |
| C | 0 | 180 | 4240 | 180 | 0 | 180 | 23950 | 180 |
| D | 0 | 180 | 4110 | 180 | 0 | 180 | 23500 | 180 |

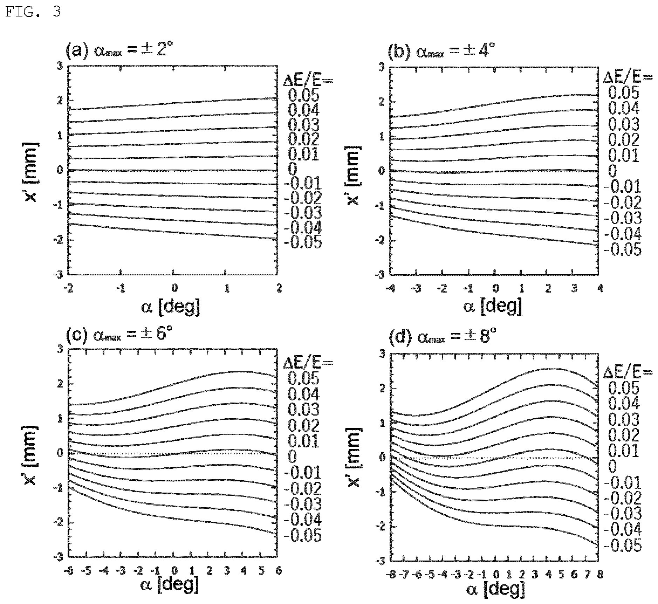

FIGS. 3(a) to 3(d) show the results of calculating the energy dispersion in the 90° electrostatic deflection convergence-type energy analyzer of FIG. 1(1).

The ratio of $\Delta E$ (= $E - E_{pass}$) to the pass energy $E_{pass}$ is in the range of -0.05 to +0.05. Energy resolution can be estimated from this dispersion. Table 3 below shows calculated contributions corresponding to the first term on the right side of the above equation (5), which indicates the energy resolution in the case of the CHA. This is an estimate of the energy resolution that is possible when the spot size of the illumination beam is brought close to zero.

A comparison of Tables 1 and 3 shows that this resolution is better than that of the CHA when the acceptance cone angle is less than ±6°. However, the contribution corresponding to the second term on the right side of the above equation (5) (in which the spot size of the irradiation beam is effective) is about five times as large as in the case of the CHA. Therefore, when the spot size of the irradiation beam is large, the 90° electrostatic deflection convergence-type energy analyzer of FIG. 1(1) is disadvantageous in terms of energy resolution compared to the CHA. However, at present, high flux beams with a diameter of about Φ10 to 100 um are generally available. When such a micro spot beam is used, the 90° electrostatic deflection convergence-type energy analyzer has a smaller contribution corresponding to the second term on the right side of the above equation (5), and can achieve high energy resolution.

[Table 3]

| $\alpha_{max}$ | ±2° | ±3° | ±4° | ±5° | ±6° | ±8° |
|---|---|---|---|---|---|---|
| $\Delta E/E$ [$10^{-2}$] | 0.037 | 0.109 | 0.258 | 0.541 | 0.975 | 2.829 |

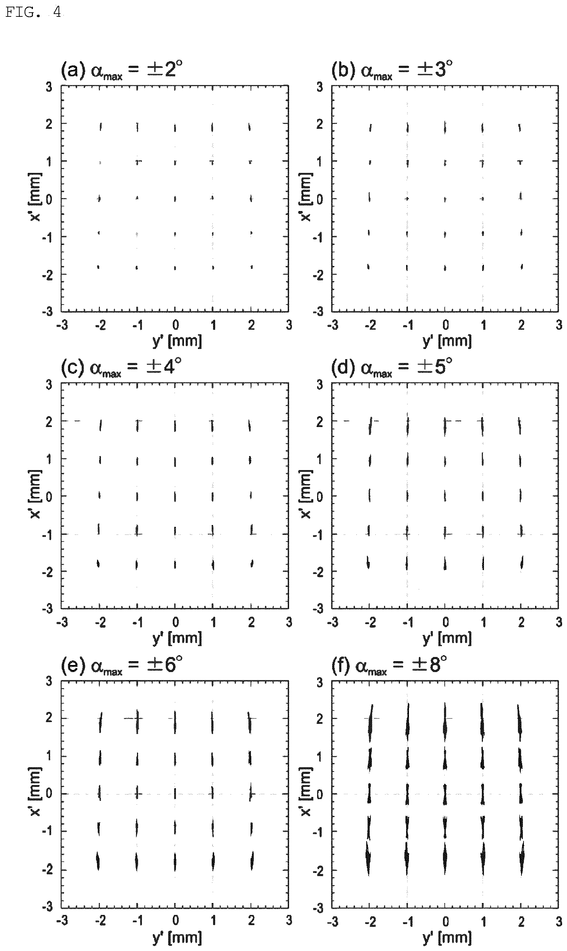

FIGS. 4(a) to 4(f) show calculation results of the two-dimensional real-space image in the 90° electrostatic deflection convergence-type energy analyzer of FIG. 1(1), as in FIG. 22. Here, the maximum value of the incident angle $\alpha$ (acceptance cone angle) is considered from ±2° to ±8°. As shown in FIG. 22, in the concentric hemispherical part of the CHA, unless the acceptance cone angle is set to about ±2° or less, a large aperture aberration occurs and a practical two-dimensional image cannot be obtained. However, as shown in FIG. 4, the 90° electrostatic deflection convergence-type energy analyzer can obtain the practical two-dimensional image even if the acceptance cone angle is widened to about ±5° to ±6°. Also, at this acceptance cone angle, from a comparison of Tables 1 and 3, an energy resolution comparable to that of the CHA can be achieved.

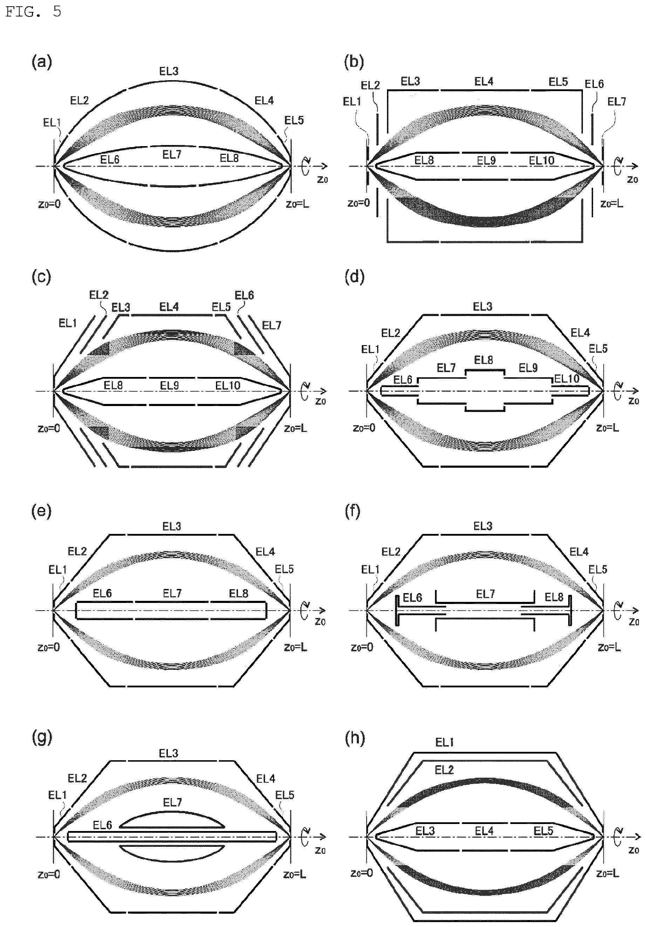

FIGS. 5(a) to 5(h) show schematic views of examples of the 90° electrostatic deflection convergence-type energy analyzer of the present invention having the same effect, although the shape and arrangement of the electrodes are different with the energy analyzer shown in FIG. 1(1). In either example, electrons enter from the incident hole provided at one end of the outer electrode and converge at the position of the exit hole provided at the other end. In FIG. 5 and the following description, the shape of the electrode means the shape of the inner surface in the case of the outer electrode, and the shape of the outer surface in the case of the inner electrode.

FIG. 5(a) shows an energy analyzer of the invention, in which a plurality of outer electrodes and a plurality of inner electrodes are disposed along the two rotation surfaces formed on the inside and the outside for a common rotation axis, and the outer and inner electrodes have toroidal surface shapes. Here, the outer electrode and the inner electrode having toroidal surface shapes have diameters that decrease toward the incident hole and the exit hole, and the space formed between them narrows toward both ends.

FIG. 5(b) shows a schematic view of an energy analyzer of the invention, in which a plurality of outer electrodes and a plurality of inner electrodes are disposed along the two rotation surfaces formed on the inside and the outside for a common rotation axis, and some of the outer electrodes are ring-shaped electrodes with round holes drilled in the plate, and the inner electrodes have a tapered shape with decreasing diameter towards the incident and exit holes. Here, the hole diameter of the ring-shaped electrode near the incident hole and the exit hole is set small so that the space formed between the outer electrode and the inner electrode becomes narrower around the incident hole and the exit hole.

FIG. 5(c) shows a schematic view of an energy analyzer of the invention, in which a plurality of outer electrodes and a plurality of inner electrodes are disposed along the two rotation surfaces formed on the inside and the outside for a common rotation axis, and some of the outer electrodes are ring-shaped electrodes with a tapered shape that decreases in diameter toward the incident and exit holes. Here, as in the case of FIG. 5(b), the inner electrode has a tapered shape in which the diameter decreases toward the incident hole and the exit hole, and the ring-shaped electrode is set to have a small hole diameter near the incident hole and the exit hole.

FIG. 5(d) shows a schematic view of an energy analyzer of the invention, in which a plurality of outer electrodes and a plurality of inner electrodes are disposed along the two rotation surfaces formed on the inside and the outside for a common rotation axis, and the inner electrode has a step shape extending to the vicinity of the incident and exit holes. As in the example of FIG. 1(1), the outer electrode has a tapered shape in which the diameter decreases toward the incident hole and the exit hole, and the space formed between the outer electrode and the inner electrode is narrowed around the incident hole and the exit hole.

FIG. 5(e) shows a schematic view of an energy analyzer of the invention, in which a plurality of outer electrodes and a plurality of inner electrodes are disposed along the two rotation surfaces formed on the inside and the outside for a common rotation axis, and the inner electrode has a rod shape extending to the vicinity of the incident hole and the exit hole. Here, the plurality of rod-shaped electrodes may have different outer diameters.

FIG. 5(f) shows a schematic view of an energy analyzer of the invention, in which a plurality of outer electrodes and a plurality of inner electrodes are disposed along the two rotation surfaces formed on the inside and the outside for a common rotation axis, and the inner electrode has an axisymmetric shape with a diameter that widens at the ends.

FIGS. 5(g) is an example of an energy analyzer of the present invention in which the number of inner electrodes is set to two and FIGS. 5(h) is an example of an energy analyzer of the present invention in which the number of outer electrodes is set to two. In FIG. 5(g), a plurality of outer electrodes and a plurality of inner electrodes are disposed along the two rotation surfaces formed on the inside and the outside for a common rotation axis, and the outer electrode is the same electrode as in FIG. 1(1), and the inner electrode consists of a rod-shaped or cylindrical electrode extending to the vicinity of the incident hole and the exit hole, and a bead-shaped electrode passing through the rod-shaped or cylindrical electrode.

FIG. 5(h) shows that the outer electrode consists of an axially symmetrical electrode extending to the incident hole and the exit hole and an axially symmetrical electrode disposed inside. The inner electrode has a tapered shape with a smaller diameter toward the incident hole and the exit hole. For the designs of FIGS. 5(e), 5(f), 5(g) and 5(h), the convergence performance is degraded. Therefore, the acceptance cone angle is set small compared to other designs. If the acceptance cone angle can be even smaller, combining the inner electrode of FIG. 5(g) with the outer electrode of FIG. 5(h), an energy analyzer of the present invention can be designed with a total of four electrodes, two inner electrodes and two outer electrodes. In the type of FIG. 5(g), in order to improve the convergence performance, it is effective to optimize the shape by increasing the degree of freedom of the shape of the inner electrode, or to design by increasing the number of bead electrodes. Also, in the type of FIG. 5(h), the convergence performance can be improved by a design in which the number of outer electrodes is increased.

In FIGS. 5(a) to 5(h), voltages for accelerating and decelerating electrons are applied to the outer and inner electrodes in proportion to the energy of incident electrons, as in the case of FIG. 1(1). A voltage that is 3 to 5 times or more as high as the converted acceleration voltage obtained by converting electron energy into an acceleration voltage is set on one or more of the inner electrodes excluding the electrodes at both ends of the inner electrode, with reference to the potential of the outer electrode in which the incident hole is formed. However, in order to obtain high convergence performance, it is desirable to set the voltage to about 10 to 50 times the converted acceleration voltage with reference to the potential of the outer electrode in which the incident hole is formed.

In an electrostatic deflection convergence-type energy analyzer of the present invention, the number of electrodes is not limited to those shown in FIG. 1(1) and FIG. 5. The number of inner electrodes and outer electrodes may be two or more, but considering both performance and cost, it is preferable to provide about 3 to 5 inner electrodes and about 3 to 7 outer electrodes. Also, it is desirable that the inner electrode and the outer electrode have a shape and arrangement in which the space formed between them narrows around the incident hole and the exit hole, as shown in FIG. 1(1) and FIG. 5. As a result, the electric field applied to the incident hole and the exit hole can be kept small. Also, the inner electrode and the outer electrode are desirably symmetrical with respect to a plane perpendicularly intersecting the straight line connecting the incident hole and the exit hole at the midpoint of the straight line. However, the actual design does not necessarily have to be plane symmetrical, and a non-plane symmetrical shape is also possible depending on the overall design of the analyzer. In the designs of FIGS. 1 and 5, electrons in the central orbit enter at the incident angle of 45° and exit at the exit angle of 45°, but the incident angle and the exit angle of the central orbit are not limited to this. For example, it is also possible to design a 90° electrostatic deflection convergence-type energy analyzer with the incident angle of 50° and the exit angle of 40°. In this case, the inner electrode and the outer electrode are preferably shaped asymmetrically with respect to a plane perpendicularly intersecting the straight line connecting the incident hole and the exit hole at the midpoint of the straight line.

It should be noted that FIG. 5 shows various types of electrode shapes. These shape types can be freely combined to design various forms of electrostatic deflection convergence-type energy analyzers, not limited to those shown in FIG. 5. The combination of shape types can be freely changed not only for the outer electrode and the inner electrode, but also for the incident hole side and the exit hole side.

**[Example 2]**

(Imaging-type electron spectrometer)

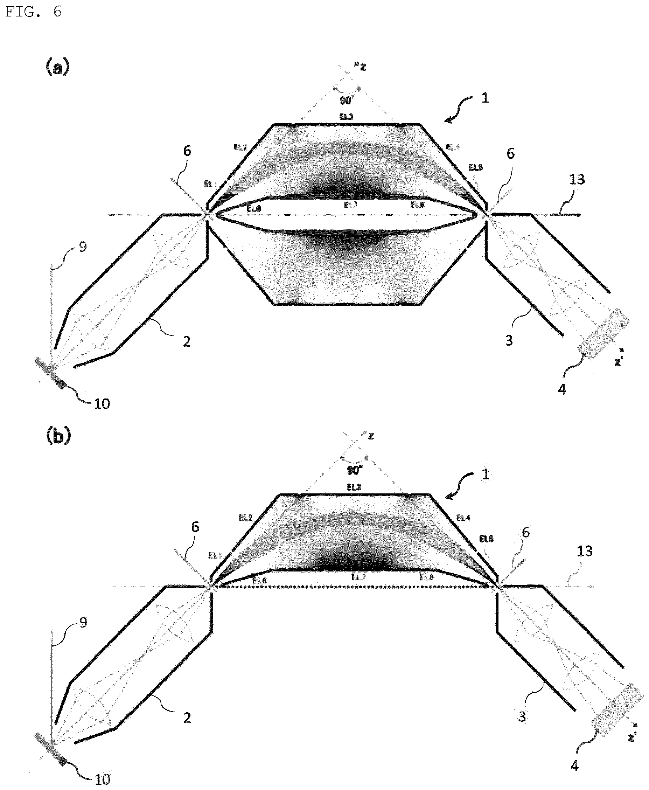

FIG. 6(a) shows a schematic view of one embodiment of the imaging-type electron spectrometer of the present invention, in which an input lens is disposed in the front stage of the 90° electrostatic deflection convergence-type energy analyzer of FIG. 1(1), and the projection lens is disposed in the rear stage. High energy resolution can be achieved in a wide energy range by decelerating the electrons emitted from the sample by the input lens and then introducing them into the energy analyzer. The 90° electrostatic deflection convergence-type energy analyzer can be expected to be very effective when combined with the input lens with a wide acceptance cone angle. As mentioned above, in order to obtain the two-dimensional real-space image and emission angle distribution with practical spatial resolution or angular resolution using the CHA, the incident angle to the concentric hemispherical part must be about $\pm 2°$ or less.

However, by using a spherical aberration correction lens with an acceptance cone angle of $\pm 50°$ or a converging lens with an omnidirectional acceptance angle ($\pm 90°$), if electrons emitted from the sample are accepted with an opening angle of $\pm 50°$ or $\pm 90°$, and converged with the opening angle of $\pm 2°$ or less, the magnification becomes very high. Even if the input lens converges with the same energy as at the time of incidence (without deceleration), if electrons with the opening angle of $\pm 50°$ or $\pm 90°$ are converged with the opening angle of $\pm 2°$, the magnification becomes about 25 or 45 times. When decelerating, the magnification is even higher. For example, if electrons of 1000 eV are decelerated to 50 eV, the magnification will be about 100 to 200 times according to the conservation of brightness. At this higher magnification, inserting a small aperture or slit at the incident and exit sides of the energy analyzer, as shown in FIG. 6(a), most electrons will not be able to pass through the aperture or slit, resulting in a significant loss of sensitivity. If the 90° electrostatic deflection convergence-type energy analyzer of the present invention is therefore used instead of the CHA, the incident angle to the energy analysis section can be widened by about 3 times, and compared with the case of using the CHA, the sensitivity can be increased by about 9 times.

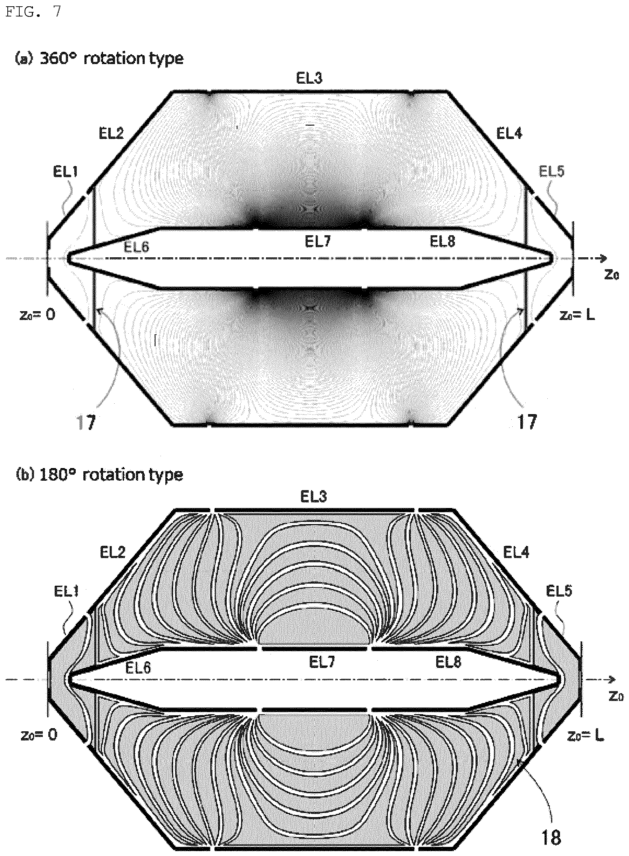

The device in FIG. 6(b) has the same basic configuration as the device in FIG. 6(a), but the structure of the energy analyzer is slightly different. In FIG. 6(b), the energy analyzer is constructed as a 180° rotation body instead of a 360° rotation body to save space. FIG. 7 shows a cross-sectional view of the energy analyzers of FIGS. 6(a) and 6(b) taken perpendicularly to the paper. In the 360° rotation body type shown in FIG. 7(a), the inner electrode is fixed by a fixed leg. The fixed leg is disposed where the effect on the electric field is as small as possible, and the electrodes EL6 and EL8 are fixed to the electrodes EL2 and EL4, respectively, by the fixed legs. In the 180° rotating body type, a compensating electrode as shown in FIG. 7B is provided to compensate the electric field at the cut surface. Further space saving can be achieved by using an energy analyzer with a rotation angle of less than 180° instead of using the 180° rotation energy analyzer. In this case, it is desirable to set the rotation angle between 90° and 180°. Also, in the case of the energy analyzer with the rotation angle of less than 180°, the compensating electrode for compensating the electric field at the cut surface is provided as in FIG. 7(b).

**[Example 3]**

(Reflection imaging-type electron spectrometer)

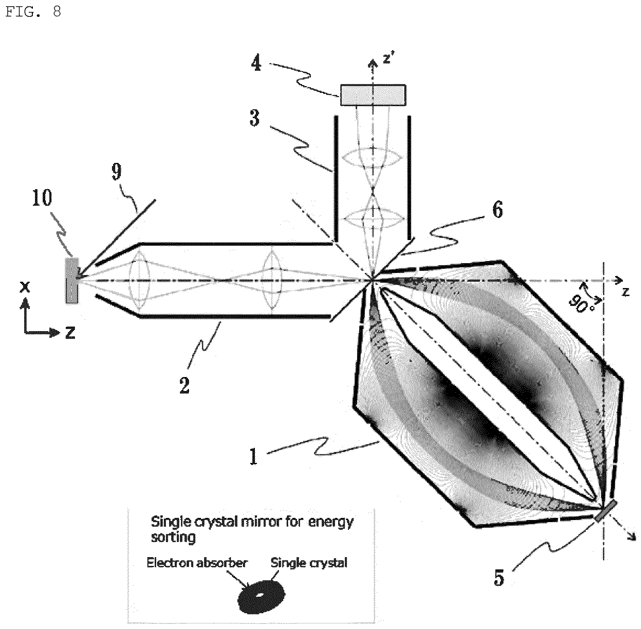

FIG. 8 shows an embodiment of the reflection imaging-type electron spectrometer of the present invention. In the reflection imaging-type electron spectrometer of this embodiment, it is characterized in that the electrons deflected by 90° and converged by the 90° electrostatic deflection convergence-type energy analyzer of Example 1 are reflected by the single crystal mirror, and again deflected by 90° and converged. Electrons emitted from the sample are converged by the input lens and enter the energy analyzer through an aperture inclined at 45°. Incident electrons are deflected by 90° and converged, reflected by the single crystal mirror, returned to the position of the incident aperture by the 90° deflection convergence, and emitted from there in a direction perpendicular to the direction of incidence. The emitted electrons are imaged by the projection lens as the two-dimensional real-space image or emission angle distribution, and are applied to the detector.

The entrance aperture also serves as an exit aperture that selects energy, and the energy resolution and sensitivity largely depend on the size of this aperture. Therefore, in order to adjust the energy resolution and sensitivity according to the measurement, the aperture section preferably has a plurality of apertures with different sizes, and it is desirable to have a mechanism for switching between them, or a mechanism such as an iris whose size can be freely changed.

Since the energy analyzer in the reflection imaging-type electron spectrometer shown in FIG. 8 has twice the energy dispersion compared to the energy analyzer shown in FIG. 6, higher energy resolution can be expected. However, noise may increase due to, for example, inelastic scattering by a single crystal mirror disposed in the exit hole of the energy analyzer, and the SN (Signal to Noise ratio) may decrease. Therefore, in order to reduce noise, it is effective to perform energy selection in two stages (two convergence positions). The selection by the above aperture is the second stage, and the first stage uses the single crystal mirror for energy selection as shown in FIG. 8. In the single crystal mirror for energy selection, the part corresponding to the aperture is a single crystal, and other parts are covered with electron absorbing materials.

**[Example 4]**

(Spin vector distribution imaging apparatus)

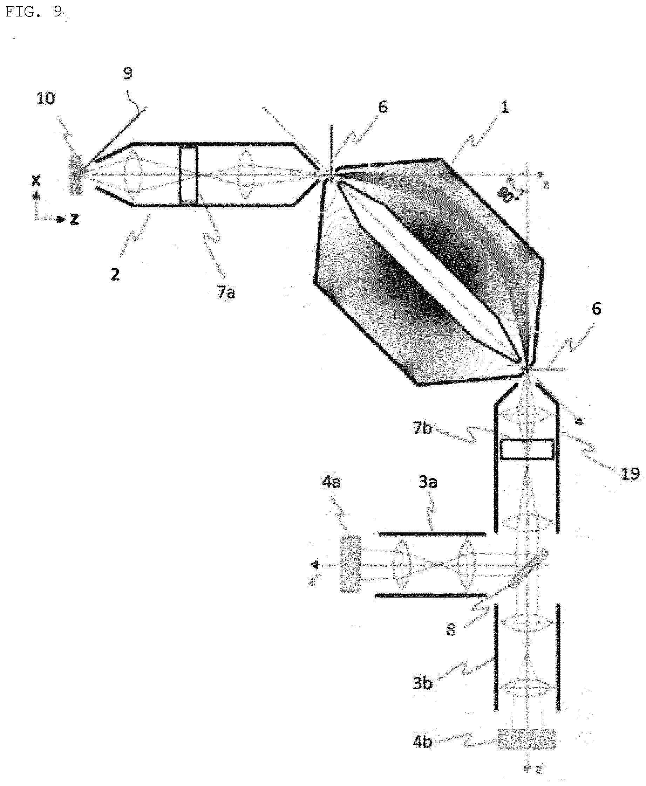

FIG. 9 shows an embodiment of the spin vector distribution imaging apparatus of the present invention using the 90° electrostatic deflection convergence-type energy analyzer of FIG. 1(1). In the spin vector distribution imaging apparatus shown in FIG. 9, a two-dimensional spin filter 8 is provided as shown in the drawing in order to measure the two-dimensional real-space image or emission angle distribution with spin resolution. An electrostatic lens 19 is provided in front of the two-dimensional spin filter 8 so that the electrons enter the two-dimensional spin filter 8 at an appropriate energy and angle, and these are adjusted. After that, the electrons reflected by the two-dimensional spin filter 8 are projected onto the first detector 4a by the first projection lens 3a. The two-dimensional spin filter 8 can be retracted from the optical axis. In the retracted state, the second projection lens 3b and the second detector 4b are used to obtain a normal (spin-integrated) two-dimensional real-space image or two-dimensional emission angle distribution.

The spin rotators 7a (SR1) and 7b (SR2) provided on the front and rear optical axes of the 90° deflection energy analyzer 1 are used for three-dimensional spin resolution within and normal to the sample surface. The SR1 and SR2 are set to rotate the spin by 90° in the surface normal to the optical axis (hereinafter referred to as "ON") or not (hereinafter referred to as "OFF"). When both the SR1 and SR2 are OFF, it is possible to measure the spin polarization in the sample in-plane y direction (normal to the paper surface). In order to measure the spin polarization in the x direction within the sample surface, only the SR1 should be turned on, and in order to measure the spin polarization in the direction normal to the sample surface (z direction), only the SR2 should be turned on.

In the spin vector distribution imaging apparatus of FIG. 9, although the first projection lens 3a and the first detector 4a are disposed on the same surface as the deflection surface, the two-dimensional spin filter 8, the first projection lens 3a, and the first detector 4a may be rotated 90° in normal to the paper surface about the intersection point of the z'-axis and the z"-axis. In this case, when both the SR1 and SR2 are OFF, the spin polarization in normal to the sample surface (z direction) can be measured. Also, to measure the spin polarization in the x direction within the sample surface, both the SR1 and SR2 should be turned ON, and to measure the spin polarization in the y direction within the sample surface, only the SR2 should be turned ON.

Although the spin vector distribution imaging apparatus with the spin rotator is shown in FIG. 9 and the following examples, the spin rotator is not necessarily required. Instead of providing the spin rotator, it is also possible to determine the direction of spins to be detected by rotating the sample and/or rotating the spin analyzer consisting of the two-dimensional spin filter, the projection lens and the detector. Also, although FIG. 9 shows the spin vector distribution imaging apparatus using the 360° rotation body type energy analyzer, a spin vector distribution imaging apparatus using an energy analyzer with a rotation angle of 180° or less can be also possible.

**[Example 5]**

(Spin vector distribution imaging apparatus)

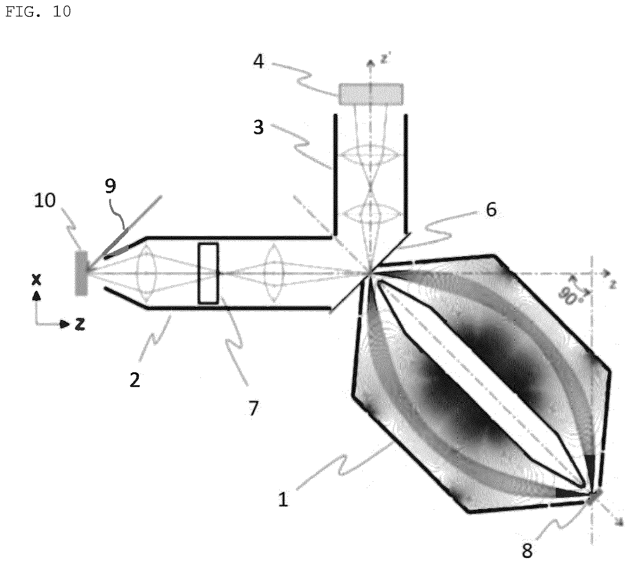

FIG. 10 shows a schematic view of a simplified version of a spin vector distribution imaging apparatus using the reflection imaging-type electron spectrometer shown in FIG. 8. The two-dimensional spin filter 8 such as Au/Ir (001) is used instead of the single crystal mirror. This provides a spin-analyzed two-dimensional real-space image or emission angle distribution at the detector. The input lens 2 may or may not have the spin rotator 7, like the spin vector distribution imaging apparatus shown in FIG. 9. With the spin rotator, it becomes possible to measure the spin polarization in two directions within the sample surface. When the spin rotator 7 is turned off, the spin polarization in the in-plane y direction (normal to the paper surface) of the sample 10 can be measured, and when the spin rotator 7 is turned on, the spin polarization in the in-plane x direction of the sample can be measured. Also, as described above, the spin polarization in two in-plane directions of the sample 10 can be measured by rotating the sample 10 instead of providing the spin rotator.

**[Example 6]**

(Switching-type electrostatic deflection convergence-type energy analyzer)

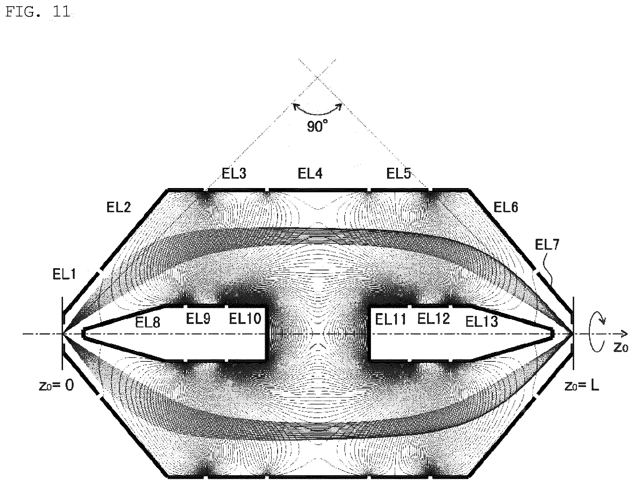

FIG. 11 is a schematic view of one embodiment of a switching-type electrostatic deflection convergence-type energy analyzer of the present invention. The switching-type electrostatic deflection convergence-type energy analyzer shown in Fig. 11 has seven outer electrodes EL1, EL2, ..., EL7 and six inner electrodes EL8, EL9, ..., EL13, in which the outer electrode is axially symmetrical in inner surface shape, and the inner electrode is axially symmetrical in outer surface shape, and they are disposed coaxially. Assuming that the entrance of the analyzer is zo = 0 and the exit is zo = L, the outer and inner electrodes are symmetrical about the plane zo = L/2. Also, in the outer electrode and the inner electrode, as in the 90° electrostatic deflection convergence-type energy analyzer shown in FIG. 1(1), the entrance-side electrodes (EL1, EL2, EL8) have a tapered shape with a diameter narrowing toward the entrance, and the exit-side electrodes (EL6, EL7, EL13) have a tapered shape with a diameter narrowing toward the exit.

The greatest feature of the switching-type electrostatic deflection convergence-type energy analyzer of FIG. 11 is that the inner electrode is separated into two regions, as the effect, electrons can pass through the space created between the left and right inner electrodes. The electron trajectories and equipotential lines shown in FIG. 11 are the results for the 90° deflection. The trajectory incident at an angle of 45° from the central axis z is the central trajectory, and the trajectories with the incident angle range of $\pm 8°$ therefrom are shown. These trajectories are somewhat less convergent at $z_0 = L$ than the trajectory shown in FIG. 1(1). Table 4 below shows the voltage (voltage value for pass energy $E_{pass}$ = 1000 eV) applied to each electrode of the switching-type electrostatic deflection convergence-type energy analyzer of FIG. 11 obtained by simulation. A high voltage of 13 kV is applied to EL10 and EL11 for electrons of 1 keV.

[Table 4]

| EL1 | EL2 | EL3 | EL4 | EL5 | EL6 | EL7 |
|---|---|---|---|---|---|---|
| 0 V | 100 V | 5000 V | 7000 V | 5000 V | 100 V | 0 V |
| EL8 | EL9 | EL10 | EL11 | EL12 | EL13 | |
| 100 V | 5600 V | 13000 V | 13000 V | 5600 V | 100 V | |

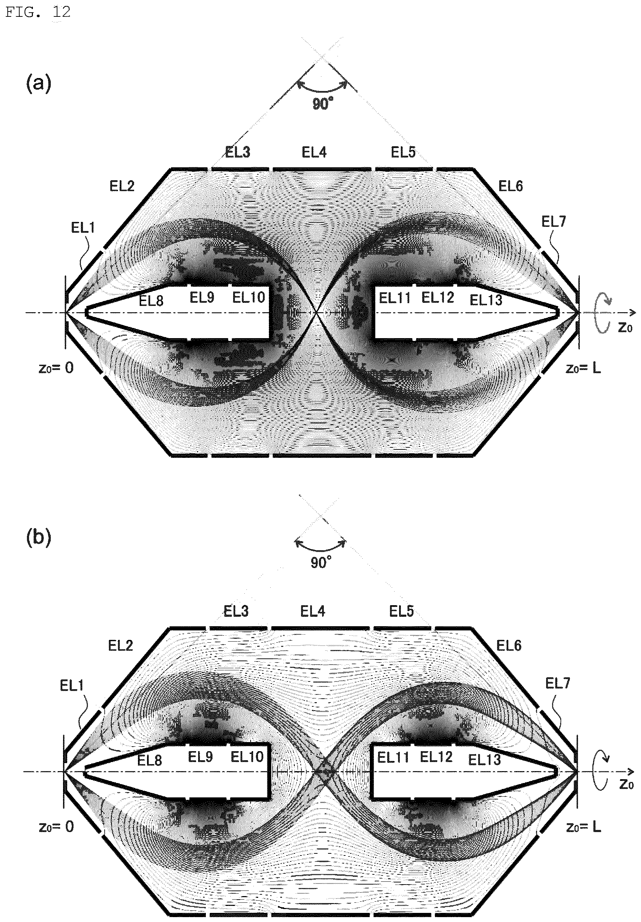

FIGS. 12(a) and 12(b) show the results of switching the deflection by changing the voltage conditions in the switching-type electrostatic deflection convergence-type energy analyzer of FIG. 11. The voltage conditions (voltage values for pass energy $E_{pass}$ = 1000 eV) in each case are shown in Tables 5 and 6 below. In FIGS. 12(a) and 12(b), unlike the case of FIG. 11, the electrons pass through the electric field formed between the left and right inner electrodes. In the case of FIG. 12(a), the trajectory once converges near zo = L/2 and then converges again at $z_0 = L$. On the other hand, in the case of FIG. 12(b), convergence occurs at zo = L without creating a crossover on the way. Here, in either case, the trajectory draws an S shape and faces the original direction at zo = L. That is, the final deflection angle is 0°.

On the other hand, the energy dispersion, in the case of Fig. 12(a), is almost the same as in the case of Fig. 11, but in the case of FIG. 12(b), the cancellation effect results in a significant reduction compared to the case of FIG. 12(a). As a result, the setting of FIG. 12(a) can be suitably used for energy analysis, and the setting of FIG. 12(b) can be suitably used for PEEM (photoemission electron microscope) measurement with suppressed chromatic aberration.

[Table 5]

| EL1 | EL2 | EL3 | EL4 | EL5 | EL6 | EL7 |
|---|---|---|---|---|---|---|
| 0 V | 300 V | 800 V | 0V | 700 V | 400 V | 0 V |
| EL8 | EL9 | EL10 | EL11 | EL12 | EL13 | |
| 0 V | 21500 V | 18200 V | 21800 V | 16000 V | 0 V | |

[Table 6]

| EL1 | EL2 | EL3 | EL4 | EL5 | EL6 | EL7 |
|---|---|---|---|---|---|---|
| 0 V | 100 V | 100 V | 500 V | 100 V | 100 V | 0 V |
| EL8 | EL9 | EL10 | EL11 | EL12 | EL13 | |

(continued)

| EL1 | EL2 | EL3 | EL4 | EL5 | EL6 | EL7 |
|-----|-----|-----|-----|-----|-----|-----|
| 0 V | 18800 V | 4900 V | 4600 V | 18400 V | 150 V | |

**[Example 7]**

(Spin vector distribution imaging apparatus)

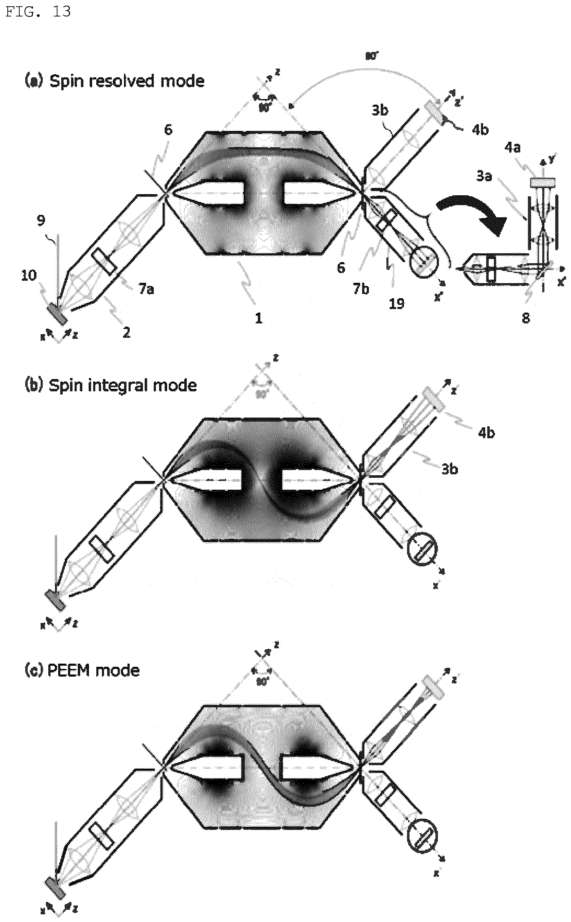

FIG. 13 shows a schematic view of a spin vector distribution imaging apparatus using the switching-type electrostatic deflection convergence-type energy analyzer shown in FIGS. 11 and 12. Three measurement modes are shown. FIG. 13(a) is a spin-resolved mode, FIG. 13(b) is a spin-integrated mode, and FIG. 13(c) is a PEEM (photoemission electron microscope) mode.

In spin-resolved mode, a deflection switching energy analyzer is set to the condition of 90° deflection. The electrostatic lens 19, the second spin rotator 7b (SR2), the two-dimensional spin filter 8, the first projection lens 3a (provided in normal to the paper surface), and the first detector 4a, for electrons deflected by 90°, are provided. Then, the three-dimensional spin polarization can be measured by the same principle as the three-dimensional spin polarization analyzer of FIG. 9. When both the second spin rotator 7b (SR2) and the first spin rotator 7a (SR1) (provided on the input lens) are set to OFF, the perpendicular spin polarization of the sample 10 can be measured.

In the spin-integrated mode, the second projection lens 3b and the second detector 4b provided for the S-shaped-trajectory electrons can measure a normal two-dimensional real-space image or the two-dimensional emission angle distribution without spin resolution. Here, the measurement of the two-dimensional real-space image is performed using the sharp photoelectron spectrum peak of core excitation. On the other hand, most of the photoelectrons emitted by irradiation with vacuum ultraviolet rays or X-rays are secondary electrons. The secondary electrons are electrons that have lost energy in various processes prior to emission and have a wide range of energies.

In PEEM, these secondary electrons are usually used for imaging to obtain bright contrast due to the difference in surface work functions. The PEEM mode of FIG. 13(c) is a mode for measuring such a PEEM image. In PEEM mode, the setup of FIG. 12(b) is used in which the energy dispersion is cancelled. This makes it possible to obtain clear PEEM images with suppressed chromatic aberration. The apparatus of FIG. 13 is characterized by having the function of this PEEM measurement (compared to the apparatus of FIG. 9) and being able to switch the measurement mode only by the voltage applied to each element.

**[Example 8]**

(Other 90° electrostatic deflection convergence-type energy analyzer)

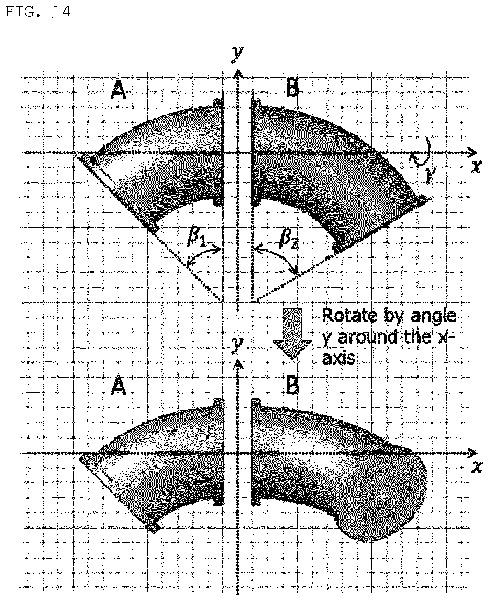

Another embodiment of an electrostatic energy analyzer with 90° deflection convergence is described with reference to FIG. 14. As shown in FIG. 14, the electrostatic energy analyzer of this example is composed of a combination of two or more electron optical systems. Here, each electron optical system to be combined may be an electrostatic convergence mirror, an electrostatic deflector, or an electrostatic lens.

In FIG. 14, A and B schematically represent two electron optical systems used for the combination. The A has a deflection angle $\beta_1$ and the B has a deflection angle $\beta_2$. However, when an electrostatic lens is used for the A or B, the center trajectory is not the center axis of the lens, but a trajectory that enters at a constant angle from the center axis and exits at a constant angle, and the deflection angle at this time is $\beta_1$ or $\beta_2$. It is assumed that central orbital electrons are incident or emitted perpendicularly to both end faces of the A and B, respectively. Both end faces of the A and B are disposed perpendicular to the xy plane, and the right end face of A and the left end face of B are disposed face to face. Let the vector perpendicular to the left end face of the A be vector a, and let the vector perpendicular to the right end face of the B be vector b, then they are given by the following equation (7) using $\beta_1$ and $\beta_2$.

[Equation 7]

$$\vec{a} = \begin{pmatrix} -\cos\beta_1 \\ -\sin\beta_1 \\ 0 \end{pmatrix}, \qquad \vec{b} = \begin{pmatrix} \cos\beta_2 \\ -\sin\beta_2 \\ 0 \end{pmatrix} \qquad (7)$$

When the B is rotated about the x-axis by an angle $\gamma$, the vector perpendicular to the right end face of the B is given by equation (8) below. Here, since the condition that the vector a and the vector b' are perpendicular is given by the following equation (9), the condition of the rotation angle $\gamma$ for 90° deflection is the following equation (10).

[Equation 8]

$$\overrightarrow{b}' = \begin{pmatrix} 1 & 0 & 0 \\ 0 & \cos\gamma & -\sin\gamma \\ 0 & \sin\gamma & \cos\gamma \end{pmatrix} \begin{pmatrix} \cos\beta_2 \\ -\sin\beta_2 \\ 0 \end{pmatrix} = \begin{pmatrix} \cos\beta_2 \\ -\sin\beta_2 \cos\gamma \\ -\sin\beta_2 \sin\gamma \end{pmatrix} \qquad (8)$$

[Equation 9]

$$\vec{a} \cdot \overrightarrow{b}' = -\cos\beta_1 \cos\beta_2 + \sin\beta_1 \sin\beta_2 \cos\gamma = 0 \qquad (9)$$

[Equation 10]

$$\gamma = \arccos\left(\frac{\cos\beta_1 * \cos\beta_2}{\sin\beta_1 * \sin\beta_2}\right) \qquad (10)$$

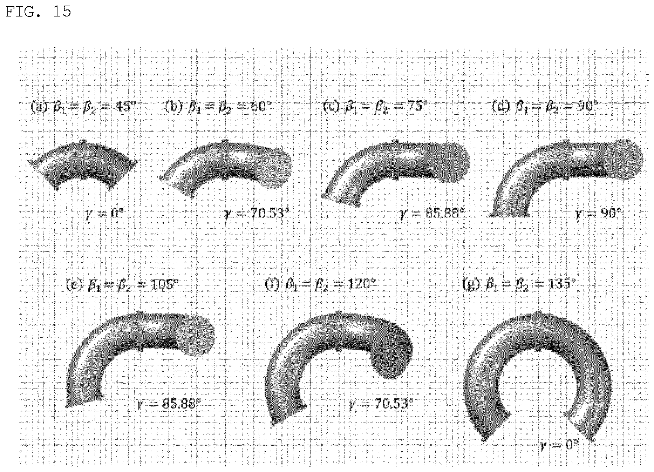

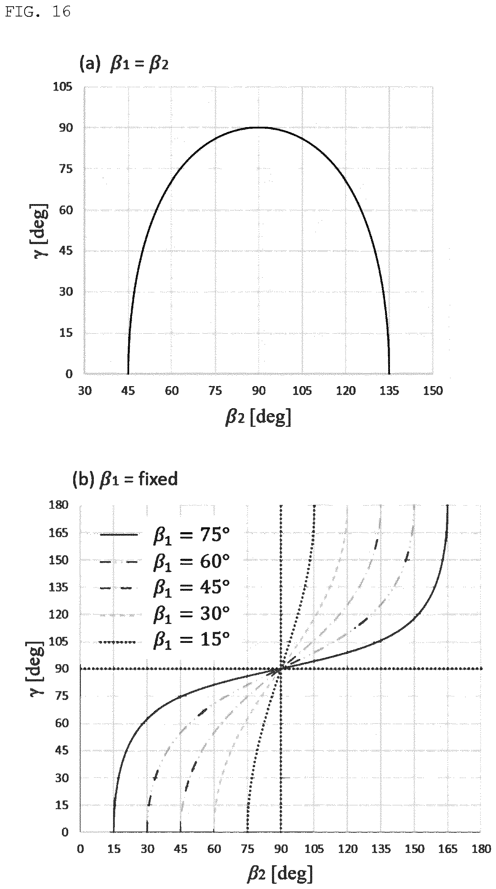

Based on the above, some combinations to achieve 90° deflection using two electron optical systems with equal deflection angles ($\beta_1 = \beta_2$) are shown in FIG. 15. For example, if $\beta_1 = \beta_2 = 60°$, combining with $\gamma = 70.5°$ results in a 90° deflection. FIG. 16(a) shows the condition of 90° deflection when $\beta_1 = \beta_2$. This condition holds only when the deflection angle is 45° to 135°. In this case, the 90° deflection can be achieved by choosing $\gamma$ as shown. FIG. 16(b) shows the condition of the 90° deflection for some $\beta_1$ when $\beta_2 \neq \beta_1$. A dotted line of $\gamma = 90°$ and a dotted line of $\beta_2 = 90°$ represent the relationship between $\beta_2$ and $\gamma$ when $\beta_1 = 90°$ and $\beta_1 = 0°$, respectively.

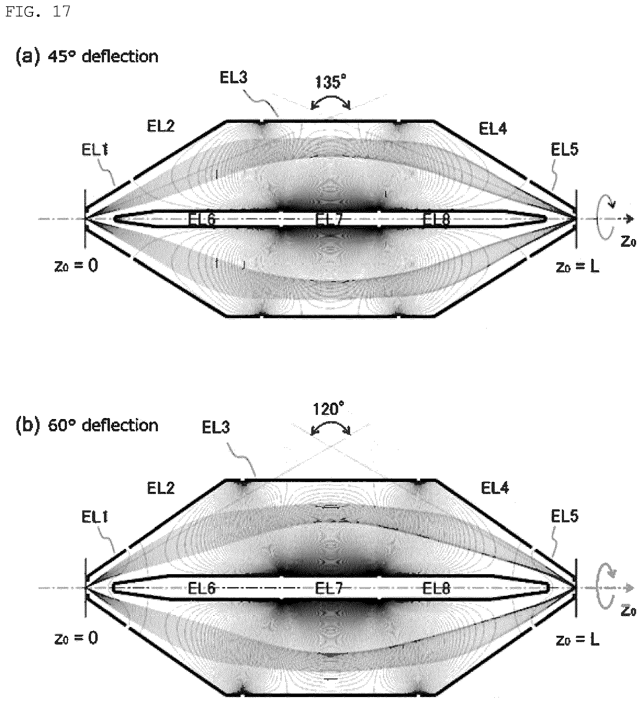

FIGS. 17(a) and 17(b) are examples of a 45° electrostatic deflection convergence-type energy analyzer and a 60° electrostatic deflection convergence-type energy analyzer, respectively. The central trajectory is a trajectory at an angle of 22.5° from the central axis in the case of the 45° electrostatic deflection convergence-type energy analyzer, and at an angle of 30° from the central axis in the case of the 60° electrostatic deflection convergence-type energy analyzer. FIGS. 17(a) and (b) show trajectories with an incident angle range of ±8° measured from the central trajectory. The convergence of these trajectories is lower than that of the 90° electrostatic deflection convergence-type energy analyzer shown in FIG. 1(1), but high convergence can be obtained by limiting the incident angle to about ±5°.

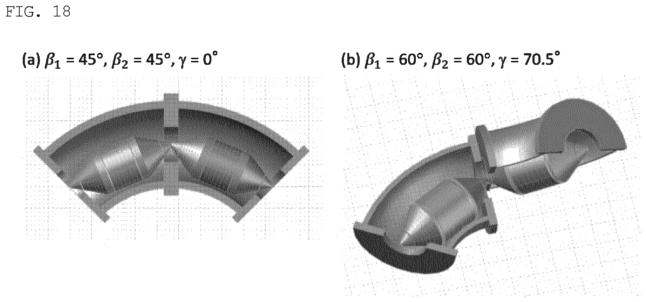

In the case of the 45° electrostatic deflection convergence-type energy analyzer shown in FIG. 17(a), as in the case shown in FIG. 15(a), the 90° deflection can be achieved by combining two of the same with the rotation angle $\gamma = 0°$. FIG. 18(a) shows a 90° electrostatic deflection convergence-type energy analyzer with this combination. On the other hand, in the case of the 60° electrostatic deflection convergence-type energy analyzer, the 90° deflection can be achieved by combining the same two with a rotation angle $\gamma = 70.5°$ as shown in Fig. 15(b). FIG. 18(b) shows a 90° electrostatic deflection convergence-type energy analyzer with this combination. Also, when combining the 45° electrostatic deflection convergence-type energy analyzer and the 60° electrostatic deflection convergence-type energy analyzer in FIG. 17, from equation (10) above, the 90° deflection can be achieved with a setting of rotation angle $\gamma = 54.7°$.

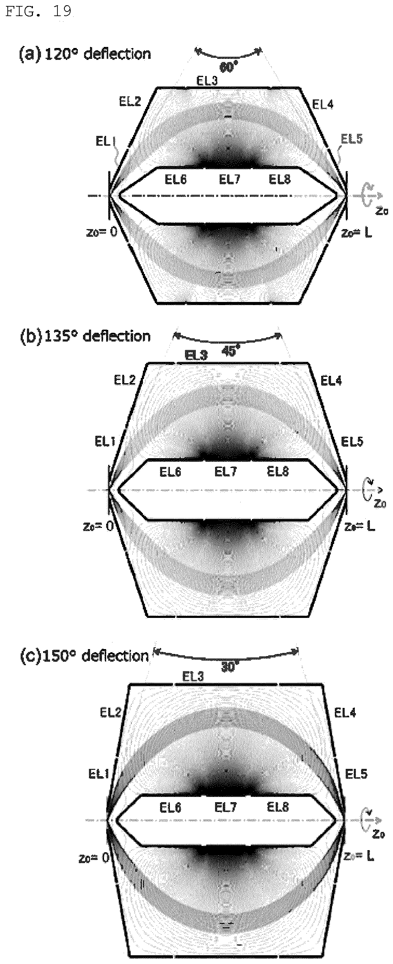

FIGS. 19(a), 19(b), and 19(c) show schematic views of examples of the 120° electrostatic deflection convergence-type energy analyzer, the 135° electrostatic deflection convergence-type energy analyzer, and the 150° electrostatic deflection convergence-type energy analyzer, respectively. The central trajectories are trajectories incident at angles of 60°, 67.5° and 75° from the central axis, respectively. FIGS. 19(a), 19(b), and 19(c) show trajectories with an incident angle range of ±8° measured from the central trajectory. These trajectories have improved convergence compared to the trajectories of FIGS. 17(a) and 17(b). Also, it is also possible to design the energy analyzer with a deflection angle of more than 150° and 180° or less with the same electrode configuration as in FIG. 19. However, when the deflection angle is about 160° or more, the convergence performance drops significantly. Also, according to FIG. 16(b) or equation (10) above, the 90° deflection can be achieved using an analyzer with a large deflection angle as in FIGS. 19(a) and 19(b). However, when the deflection angle is large, the energy analyzer with the rotation angle of 180° or less is used instead of the 360° rotation type (see FIG. 7) as shown in FIG. 17 due to geometric constraints.

The energy analyzer with a small deflection angle and the energy analyzer with a large deflection angle each have advantages and disadvantages. First, when using an energy analyzer with the small deflection angle as shown in FIGS. 17(a) and 17(b), this has the advantage of facilitating combined design with the input lens. However, the smaller the deflection angle, the smaller the energy dispersion and the lower the energy resolution.

On the other hand, in the case of the energy analyzer with the large deflection angle as shown in FIGS. 19(a) and 19(b), the energy resolution is improved, but when combined with the input lens or another energy analyzer, a complicated design such as a 180° rotation body type is required.

Table 7 below summarizes the applied voltages for each of the electrostatic deflection convergence-type energy analyzers of FIGS. 1, 17 and 19. These are voltage values for pass energy $E_{pass}$ = 1000 eV. In these energy analyzers, a high voltage of about 13 to 24 kV with respect to 1000 eV is applied to the inner electrode EL7. In the electrostatic deflection convergence-type energy analyzer of the present invention, not limited to the electrostatic deflection convergence-type energy analyzers shown in FIGS. 1, 17 and 19, the voltage applied to at least one of the inner electrodes is desirably set in the range of approximately 10 to 50 kV with respect to 1000 eV. However, when high convergence performance is not required, the voltage applied to at least one of the inner electrodes may be about 2 to 5 kV or more and about 10 kV or less with respect to 1000 eV.

[Table 7]

|  | Voltage (V) EL1 | Voltage (V) EL2 | Voltage (V) EL3 | Voltage (V) EL4 | Voltage (V) EL5 | Voltage (V) EL6 | Voltage (V) EL7 | Voltage (V) EL8 |
|---|---|---|---|---|---|---|---|---|
| deflection | 0 | 100 | 3900 | 160 | 0 | 0 | 13550 | 0 |
| 60° deflection | 0 | 200 | 4800 | 200 | 0 | 200 | 17900 | 200 |
| 90° deflection | 0 | 180 | 4240 | 180 | 0 | 180 | 23950 | 180 |
| 120° deflection | 0 | 180 | 1600 | 180 | 0 | 180 | 21250 | 180 |
| 135° deflection | 0 | 240 | 600 | 240 | 0 | 240 | 21750 | 240 |
| 150° deflection | 0 | 240 | 500 | 240 | 0 | 240 | 28000 | 240 |

It should be noted that although the electrostatic deflection convergence-type energy analyzer with a specific deflection angle is shown as an example, the electrostatic deflection convergence-type energy analyzer of the present invention can also be provided as the energy analyzer with any deflection angle from 45° to 180° by a similar design.

**[Example 9]**

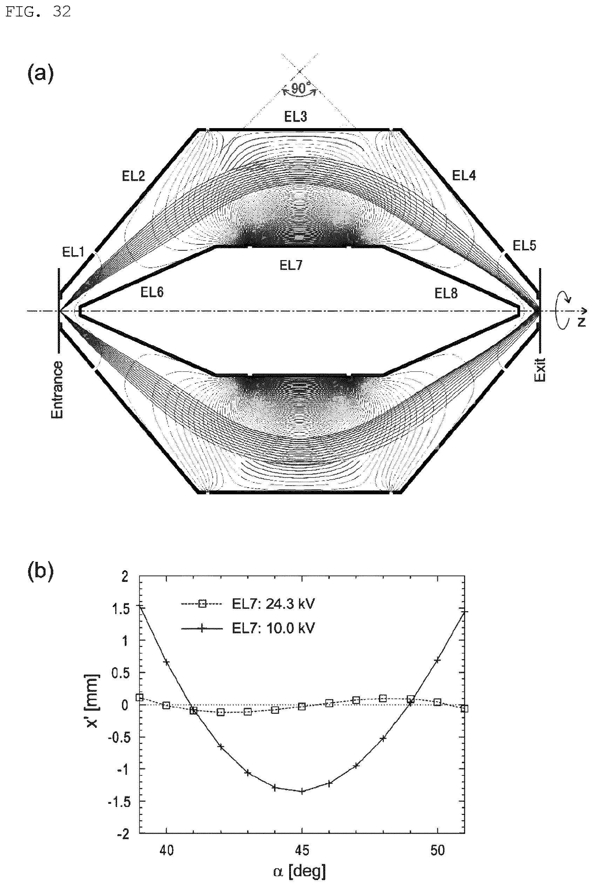

An electrostatic deflection convergence-type energy analyzer shown in FIG. 32(a) is that, in the electrostatic deflection convergence-type energy analyzer having the same configuration as that of FIG. 1, the voltage applied to the EL7 is set to 10 times the converted acceleration voltage (10 kV when $E_{pass}$ = 1 keV), and the outer diameter of the inner electrode, the inner diameter of the outer electrode, and the voltage applied to the EL3 are adjusted to minimize the aperture aberration. In FIG. 1, the ratio of the outer diameter to the length L of the inner electrode is approximately 0.12, and the ratio of the inner diameter to the length L of the outer electrode is approximately 0.64. In contrast, in FIG. 32(a), the ratio of the outer diameter to the length L of the inner electrode is approximately 0.27, and the ratio of the inner diameter to the length L of the outer electrode is approximately 0.76. In the electrostatic deflection convergence-type energy analyzer of FIG. 32(a), as shown in FIG. 32(b), image blur due to aperture aberration is increased by about 13 times as compared with the configuration of the electrostatic deflection convergence-type energy analyzer shown in FIG. 1. As described above, when the voltage applied to the EL7 is lowered to about ten times the converted acceleration voltage, the deterioration of the convergence performance becomes remarkable. However, this deterioration of the convergence performance can be greatly reduced by appropriately shaping the inner electrode.

**[Example 10]**

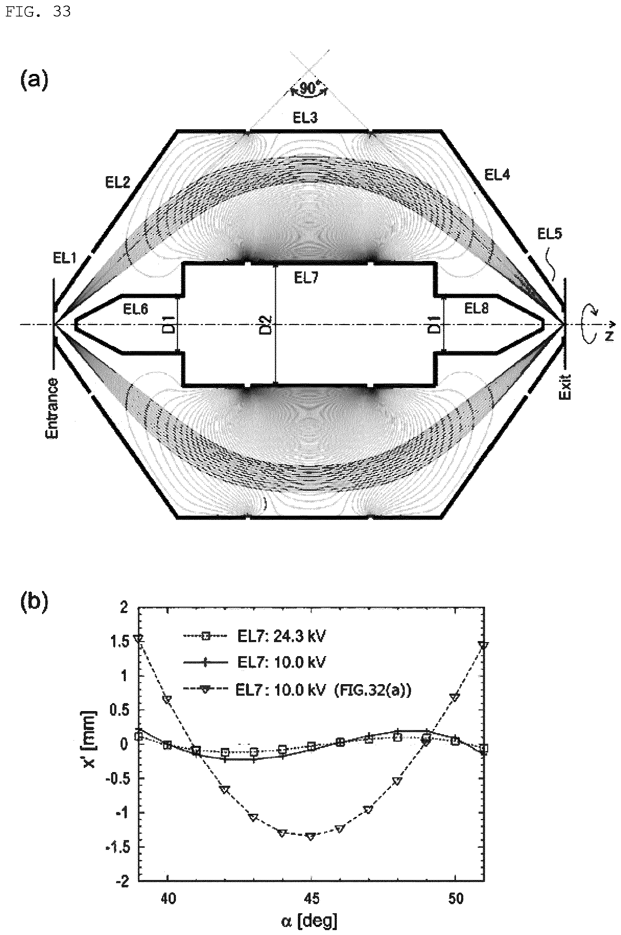

Here, FIG. 33(a) shows an example of an appropriate shape for the inner electrode in the electrostatic deflection convergence-type energy analyzer of the present invention. As in the case of FIG. 32(a), the EL7 is set to a voltage 10 times the converted acceleration voltage. The EL6 and EL8 have a stepped shape characterized by two outer diameters D1 and D2 (D1 < D2), unlike the electrostatic deflection convergence-type energy analyzers shown in FIGS. 1 and 32(a).

In FIG. 33(a), the ratio of D1 to length L is 0.11, and the ratio of D2 to length L is 0.24. Also, the ratio of the inner diameter of the outer electrode to the length L is approximately 0.76. The convergence performance is inferior to that of the electrostatic deflection convergence-type energy analyzer shown in FIG. 1, as shown in FIG. 33(b). However, the performance can be greatly improved as compared with the electrostatic deflection convergence-type energy analyzer shown in FIG. 32(a). In FIG. 33(a), the EL6 and EL8 have tapered parts that decrease in diameter toward the entrance or exit, as in the case of the electrostatic deflection convergence-type energy analyzers shown in FIGS. 1 and 32(a). A design without this tapered part is also effective, and the simplest shape may be a coaxial two-stage cylindrical shape characterized only by two outer diameters D1 and D2 and two lengths in the z-axis direction.

**[Example 11]**

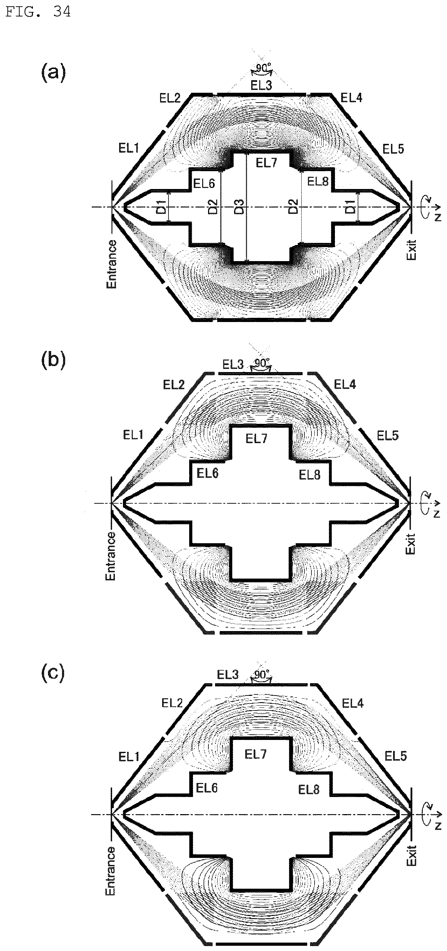

FIG. 34 shows an example of the electrostatic deflection convergence-type energy analyzer of the present invention in which a lower voltage is applied to the inner electrode EL7. FIGS. 34(a), 34(b), and 34(c) show, respectively, examples in which voltages 5 times, 2 times, and 1.5 times the converted acceleration voltage (5 kV, 2 kV, and 1.5 kV, respectively, when $E_{pass}$ = 1 keV) are applied to the inner electrode EL7. In either case, the inner electrodes EL6 and EL8 have the stepped shape with the tapered part on the entrance or exit side. However, as in the case of FIG. 33, the design without the tapered part is also useful, and may be a coaxial two-step cylindrical shape characterized by only two outer diameters D1, D2 and two lengths along the z-axis. The outer surface of the EL7 has a cylindrical shape with the outer diameter larger than D1 and D2. Thus, the inner electrode has a coaxial three-stage cylindrical shape as a whole, except for the tapered part. FIGS. 34(a), (b), and (c) respectively show the results of adjusting the three outer diameters, the length of each part, and the applied voltage so that the aperture aberration is minimized. The ratios of D1, D2, D3 to the length L are D1/L = 0.11, D2/L = 0.26, D3/L = 0.38 for the electrostatic deflection convergence-type energy analyzer shown in FIG. 34(a), and D1/L = 0.13, D2/L = 0.28, D3/L = 0.52 for the electrostatic deflection convergence-type energy analyzer shown in FIG. 34(b), and D1/L = 0.13, D2/L = 0.28, D3/L = 0.51 for the electrostatic deflection convergence-type energy analyzer shown in FIG. 34(c). Also, the ratio of the inner diameter to the length L of the outer electrode is approximately 0.76 in the case of the electrostatic deflection convergence-type energy analyzer shown in FIG. 34(a), and is approximately 0.87 in the case of the electrostatic deflection convergence-type energy analyzer shown in FIGS. 34(b) and 34(c).

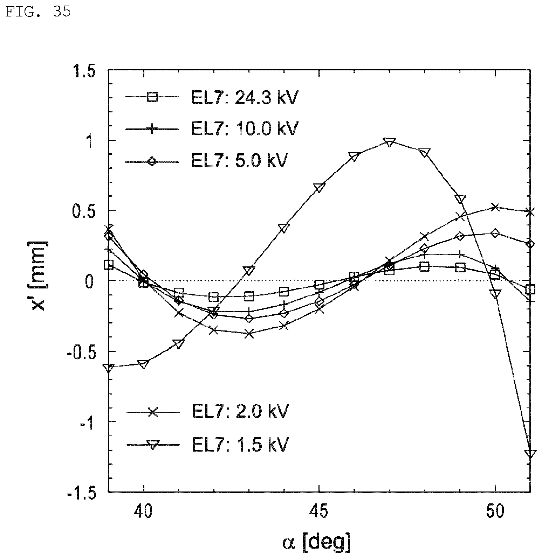

The aperture aberration for the electrostatic deflection convergence-type energy analyzer shown in FIGS. 34(a), (b), and (c) is shown in FIG. 35, with the aperture aberration in the case of the electrostatic deflection convergence-type energy analyzer shown in FIGS. 1 and 33(a). The point to be noted here is that the aperture aberration increases as the voltage applied to the EL7 is lowered. Therefore, for the purpose of reducing aperture aberration, it is desirable to set the voltage applied to the EL7 as high as possible. Another point to note is that the aperture aberration abruptly increases when the voltage applied to the EL7 is lowered from 2 times to 1.5 times the converted acceleration voltage. Therefore, it is desirable to set the voltage applied to the EL7 to about twice or more the converted acceleration voltage. The aperture aberration can be further reduced by setting the voltage applied to the EL 7 higher than in the case of the electrostatic deflection convergence-type energy analyzer shown in FIG. 1. However, the voltage applied to the EL7 cannot be set as high as desired, and is subject to restrictions in the design and manufacture of the inner diameter electrode.

**[Example 12]**

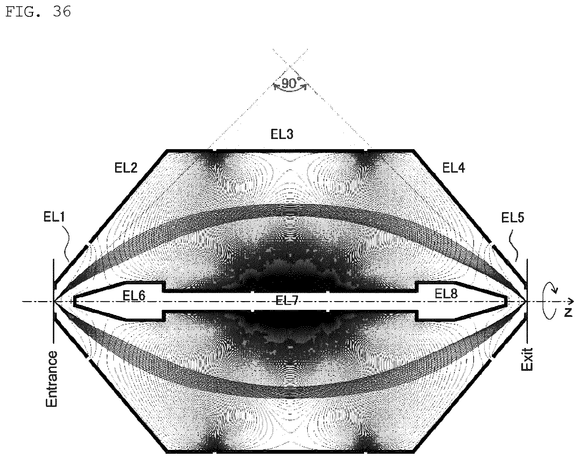

FIG. 36 shows an example of the electrostatic deflection convergence-type energy analyzer of the present invention when the voltage applied to the EL7 is set to 50 times the converted acceleration voltage. As a result of optimization, the outer diameter of the EL7 is smaller than the outer diameters of the EL6 and EL8. As this figure suggests, the limit of the voltage applied to the EL7 is about 50 times, and if it is attempted to be increased beyond this, the outside diameter of the EL7 becomes too small, which causes the problem of difficulty in wiring and insulation.

When the electrostatic deflection convergence-type energy analyzer of the present invention is used in an imaging device, the aperture aberration must be made sufficiently small. However, in this case, it is desirable to set the voltage applied to the EL7 to about 10 to 50 times the converted acceleration voltage, based on FIG. 35 and the above consideration. Also, when both high convergence performance and ease of design/manufacturing are required, it is desirable to set the voltage applied to the EL7 to about 20 to 30 times the converted acceleration voltage.

Table 8 below summarizes the applied voltages in the case of electrostatic deflection convergence-type energy analyzers shown in FIGS. 32(a), 33(a), 34(a), 34(b), 34(c) and 36. According to Table 8, it can be seen that methods of applying voltages to the EL1 to EL8 changes starting with the electrostatic deflection convergence-type energy analyzer shown in FIG. 34(b). When the voltage applied to the EL7 is about twice or more the converted acceleration voltage, 0 or positive voltage is applied to the other electrodes, and when the voltage applied to the EL7 is about twice or less the converted acceleration voltage, 0 or negative voltage is applied to the other electrodes. Considering the case of the electrostatic deflection convergence-type energy analyzer shown in FIG. 34(b), the outer electrodes EL1 to EL5 are all set to the same potential (0 V), so they can be also collectively designed as one electrode. Also, in the case of the electrostatic deflection convergence-type energy analyzer shown in FIG. 34(a), the outer electrodes can also be designed as a total of three electrodes, since (adjacent) EL1, EL2 and EL4, EL5 are at the same potential (0 V). Thus, the number of outer electrodes is not limited to five, EL1 to EL5 shown in the example, but may be three or one, and may be two, four or six or more. Also, the number of inner electrodes is not limited to the three EL6 to EL8 shown in the example, and may be four or more. Increasing the number of electrodes allows finer control of the electric field.

[Table 8]

| Electrode shape | Voltage (V) @EL1 | Voltage (V) @EL2 | Voltage (V) @EL3 | Voltage @EL4 | Voltage (V) @EL5 | Voltage (V) @EL6 | Voltage (V) @EL7 | Voltage (V) @EL8 |
|---|---|---|---|---|---|---|---|---|
| FIG.32(a) | 0 | 180 | 4350 | 180 | 0 | 180 | 24310 | 180 |
| FIG.33(a) | 0 | 30 | 1790 | 30 | 0 | 30 | 10000 | 30 |
| FIG.34(a) | 0 | 0 | 1240 | 0 | 0 | 0 | 5000 | 0 |
| FIG.34(b) | 0 | 0 | 0 | 0 | 0 | 0 | 2000 | 0 |
| FIG.34(c) | 0 | -100 | -233 | -100 | 0 | 0 | 1500 | 0 |
| FIG.36 | 0 | 390 | 8430 | 390 | 0 | 390 | 50000 | 390 |

As for the shape and arrangement of the electrodes, various changes are possible as long as they are set so as to form an electric field similar to the electric field shown in the example. Here, the characteristics of the electric field of the electrostatic deflection convergence-type energy analyzer of the present invention will be described.

1) When electrons enter the electrostatic deflection convergence-type energy analyzer, the electrons change direction little by little while being accelerated by the electric field.

2) The direction of the electrons is parallel to the axis (z-axis) of the electrostatic deflection convergence-type energy analyzer at or near the intermediate plane (z = L/2) between the incident and exit points.

3) After that, while being decelerated, the traveling direction is changed little by little, and the exit position is reached. At this time, the electrons in the central orbit obtain a predetermined deflection angle and are emitted.

On the other hand, in the case of the CMA (Coaxial cylindrical mirror analyzer), electrons incident on the cylindrical electric field change direction by deceleration, become parallel to the z-axis at the intermediate plane between the incident and the exit points, and then change direction while being accelerated, and reach the exit position. Also, in the CHA, the electrons in the central orbit draw circular orbits due to the balance between the central force and the centrifugal force due to the spherically symmetrical electric field, so the electrons are neither accelerated nor decelerated. Thus, the electrostatic deflection convergence-type energy analyzer of the present invention is fundamentally different from the electric fields used in the CMA and CHA.

[Industrial Applicability]

The present invention is useful for energy analyzers, photoelectron spectrometers, and spin polarization analyzers.

[Description of Symbols]

1 Electrostatic 90°deflection convergence-type energy analyzer
2 Input lens
3, 3a, 3b Projection lens
4, 4a, 4b Detector
5 Single crystal mirror
6 Aperture
7, 7a, 7b Spin rotator

8 Two-dimensional spin filter
9 Light or electron beam
10 Sample
11 Incident hole
12 Exit hole
13 Rotation axis
14 Central plane
17 Inner electrode fixing leg
18 Compensation electrode
19 Electrostatic lens
20a, 20b Isosceles trapezoid

**Claims**

1. An electrostatic deflection convergence-type energy analyzer comprising:

   one or a plurality of outer electrodes and a plurality of inner electrodes being disposed along the shapes of two rotation bodies formed on the inside and the outside for a common rotation axis;
   an electron incident hole and exit hole being formed in the outer electrodes at both ends on the rotation axis;
   a voltage applying means for applying a voltage for accelerating and decelerating electrons to the outer electrode and the inner electrode; and
   wherein the inner-surface shape of the outer electrode is a shape becoming smaller in diameter toward the incident hole and becoming smaller in diameter toward the exit hole;
   wherein the outer-surface shape of the inner electrode is a shape that becomes smaller in diameter toward the incident hole, a rod shape extending toward the incident hole, or a shape that becomes larger in diameter at the end on the incident hole side, and the outer-surface shape of the inner electrode is a shape that becomes smaller in diameter toward the exit hole, a rod shape extending toward the exit hole, or a shape that becomes larger in diameter at the end on the exit hole side;
   wherein the voltage applying means voltage is applied to one or a plurality of inner electrodes except for the inner electrodes at both ends, and is a voltage that is at least twice a converted acceleration voltage obtained by converting the energy of electrons into an acceleration voltage with reference to the potential of the outer electrode having the incident hole formed therein; and
   wherein a central trajectory is at a predetermined incident angle with the rotation axis, an applied voltage which is applied to each electrode is adjusted such that the central trajectory of electrons incident from the incident hole converges on the position of the exit hole at a predetermined exit angle with the rotation axis.

2. The electrostatic deflection convergence-type energy analyzer according to claim 1, wherein the inner-surface shape of the outer electrode and the outer-surface shape of the inner electrode are symmetrical with respect to a plane perpendicularly intersecting a line connecting the incident hole and the exit hole at the midpoint of the line.

3. The electrostatic deflection convergence-type energy analyzer according to claim 1 or 2, wherein the inner-surface shape of the outer electrode that becomes smaller in diameter toward the incident hole is a tapered shape, a toroidal surface shape, or a ring shape, and the inner-surface shape of the outer electrode that becomes smaller in diameter toward the exit hole is a tapered shape, a toroidal surface shape, or a ring shape; and
   wherein the outer-surface shape of the inner electrode that becomes smaller in diameter toward the incident hole is a tapered shape or a toroidal surface shape, or a stepped shape that becomes gradually smaller in diameter toward the incident hole, and the outer-surface shape of the inner electrode that becomes smaller in diameter toward the exit hole is a tapered shape or a toroidal surface shape, or a stepped shape that becomes gradually smaller in diameter toward the exit hole.

4. The electrostatic deflection convergence-type energy analyzer according to any one of claims 1 to 3, wherein the voltage applied to one or a plurality of the inner electrodes except for the inner electrodes at both ends is set to a voltage that is at least 10 to 50 times or more of the converted acceleration voltage obtained by converting the energy of electrons into an acceleration voltage.

5. The electrostatic deflection convergence-type energy analyzer according to claim 4, wherein the voltage applied to one or more outer electrodes excluding the electrodes at both ends of the outer electrode is 10 times or less of the converted acceleration voltage.

6. The electrostatic deflection convergence-type energy analyzer according to claim 4, wherein the deflection angle is 90°.

7. The electrostatic deflection convergence-type energy analyzer according to any one of claims 1 to 5, wherein the deflection angle is 45°, 60°, 120°, 135°, or 150°.

8. The electrostatic deflection convergence-type energy analyzer according to any one of claims 1 to 5, wherein the deflection angle is 45° or more and less than 90°, or more than 90° and 180° or less.

9. The electrostatic deflection convergence-type energy analyzer according to any one of claims 1 to 8, wherein electrons of center trajectory can pass across the rotation axis at the inner electrode, by changing the voltage conditions applied to the electrodes, to control whether or not the central trajectory crosses the rotation axis, thereby switching the presence or absence of deflection of the electrons emitted from the emission hole.

10. The electrostatic deflection convergence-type energy analyzer according to any one of claims 1 to 8, wherein the rotation body is a rotation body having a rotation angle of 90° to 180°, and is provided with a compensation electrode for compensating the electric field at the cut surface.

11. The electrostatic deflection convergence-type energy analyzer according to any one of claims 1 to 10, configured as an imaging-type electron spectrometer **characterized by** providing an input lens having the incident hole on the lens axis, being disposed so that the lens axis and the rotation axis form a predetermined incident angle, and accepting the electrons emitted from the sample and emitting the electrons to the incident hole;
a projection lens having the exit hole on the projection lens axis, and being disposed so that the projection lens axis and the rotation axis form a predetermined exit angle, and accepting from the exit hole electrons that are deflected and converged by the energy analyzer; and
a detector detecting electrons transmitted through the projection lens.

12. The electrostatic deflection convergence-type energy analyzer according to any one of claims 1 to 9, configured as an electron spectrometer **characterized by** providing an input lens having the incident hole on the lens axis, being disposed so that the lens axis and the rotation axis form a predetermined incident angle, and accepting the electrons emitted from the sample and emitting the electrons to the incident hole;

a mirror disposed in the exit hole of the energy analyzer and normal to the rotation axis; a projection lens having the incident hole on the projection lens axis, and being disposed so that the projection lens axis and the rotation axis form a predetermined incident angle, and accepting from the incident hole electrons that are deflected and converged by the energy analyzer, and afterward reflected by the mirror, and deflected and converged again; and a detector detecting electrons transmitted through the projection lens.

13. The electrostatic deflection convergence-type energy analyzer according to claim 6 or the electrostatic deflection convergence-type energy analyzer according to claim 9, wherein the deflection angle is 90°, configured as a spin vector distribution imaging apparatus **characterized by** providing an input lens having the incident hole on the lens axis, being disposed so that the lens axis and the rotation axis form a predetermined incident angle, and accepting the electrons emitted from the sample and emitting the electrons to the incident hole;

an electrostatic lens having the exit hole on the electrostatic lens axis, being disposed so that the electrostatic lens axis and the rotation axis form a predetermined exit angle, and accepting from the exit hole electrons that are deflected and converged by the energy analyzer;
a two-dimensional spin filter disposed on the electrostatic lens axis at the exit side of the electrostatic lens;

a projection lens that accepts the electrons reflected by the spin filter; and
a detector that detects the electrons transmitted through the projection lens.

14. The electrostatic deflection convergence-type energy analyzer according to claim 6, configured as a spin vector distribution imaging apparatus **characterized by** providing an input lens having the incident hole on the lens axis, being disposed so that the lens axis and the rotation axis form a predetermined incident angle, and accepting the electrons emitted from the sample and emitting the electrons to the incident hole;

a two-dimensional spin filter disposed in the exit hole of the energy analyzer and normal to the rotation axis;
a projection lens having the incident hole on the projection lens axis, being disposed so that the projection lens axis and the rotation axis form a predetermined incident angle, and accepting from the incident hole electrons that are deflected and converged by the energy analyzer, reflected by a two-dimensional spin filter, and then deflected and converged again; and
a detector detecting electrons transmitted through the projection lens.

15. The electrostatic deflection convergence-type energy analyzer according to claim 9, wherein the deflection angle is 90°, configured as a spin vector distribution imaging apparatus **characterized by** providing an input lens having the incident hole on the lens axis, being disposed so that the lens axis and the rotation axis form a predetermined incident angle, and accepting the electrons emitted from the sample and emitting the electrons to the incident hole;

an electrostatic lens having the exit hole on the electrostatic lens axis, being disposed so that the electrostatic lens axis and the rotation axis form a predetermined exit angle, and accepting from the exit hole electrons that are deflected and converged by the energy analyzer;
a two-dimensional spin filter disposed on the electrostatic lens axis at the exit side of the electrostatic lens;
a first projection lens accepting the electrons reflected by the two-dimensional spin filter and a first detector detecting the electrons transmitted through the first projection lens;
a second projection lens having the exit hole on the projection lens axis, being disposed so that the projection lens axis and the rotation axis form a predetermined exit angle, and accepting from the exit hole electrons that are converged without deflection by the energy analyzer; and
a second detector for detecting electrons transmitted through the second projection lens.

16. The spin vector distribution imaging apparatus according to any one of claims 13 to 15, wherein the electrostatic deflection convergence-type energy analyzer with the deflection angle of 90° is replaced with a combination of multiple electrostatic deflection convergence-type energy analyzers of claim 7, or is replaced with a combination of the electrostatic deflection convergence-type energy analyzer according to any one of claims 1 to 5, that is set to the deflection angle of 45° to 150°.

17. The spin vector distribution imaging apparatus according to any one of claims 13 to 16, being provided a spin rotator inside or outside at least one of the input lens and the electrostatic lens that rotates the spin 90° in a plane perpendicular to each lens axis.

FIG. 1

(1)

(2)

FIG. 2

(a)

(b)

FIG. 3

(a) $\alpha_{max} = \pm 2°$

(b) $\alpha_{max} = \pm 4°$

(c) $\alpha_{max} = \pm 6°$

(d) $\alpha_{max} = \pm 8°$

FIG. 4

(a) $\alpha_{max} = \pm 2°$

(b) $\alpha_{max} = \pm 3°$

(c) $\alpha_{max} = \pm 4°$

(d) $\alpha_{max} = \pm 5°$

(e) $\alpha_{max} = \pm 6°$

(f) $\alpha_{max} = \pm 8°$

FIG. 5

FIG. 6

(a)

(b)

FIG. 7

(a) 360° rotation type

(b) 180° rotation type

FIG. 8

Single crystal mirror for energy sorting

Electron absorber     Single crystal

FIG. 9

FIG. 10

FIG. 11

FIG. 12

(a)

(b)

FIG. 13

(a) Spin resolved mode

(b) Spin integral mode

(c) PEEM mode

FIG. 14

FIG. 15

(a) $\beta_1 = \beta_2 = 45°$    (b) $\beta_1 = \beta_2 = 60°$    (c) $\beta_1 = \beta_2 = 75°$    (d) $\beta_1 = \beta_2 = 90°$

$\gamma = 0°$    $\gamma = 70.53°$    $\gamma = 85.88°$    $\gamma = 90°$

(e) $\beta_1 = \beta_2 = 105°$    (f) $\beta_1 = \beta_2 = 120°$    (g) $\beta_1 = \beta_2 = 135°$

$\gamma = 85.88°$    $\gamma = 70.53°$    $\gamma = 0°$

FIG. 16

(a) $\beta_1 = \beta_2$

(b) $\beta_1$ = fixed

FIG. 17

(a) 45° deflection

(b) 60° deflection

FIG. 18

(a) $\beta_1 = 45°$, $\beta_2 = 45°$, $\gamma = 0°$

(b) $\beta_1 = 60°$, $\beta_2 = 60°$, $\gamma = 70.5°$

FIG. 19

(a) 120° deflection

(b) 135° deflection

(c) 150° deflection

FIG. 20

FIG. 21

FIG. 22

(a) $\alpha_{max} = \pm 1°$

(b) $\alpha_{max} = \pm 2°$

(c) $\alpha_{max} = \pm 3°$

(d) $\alpha_{max} = \pm 4°$

(e) $\alpha_{max} = \pm 5°$

(f) $\alpha_{max} = \pm 6°$

FIG. 23

FIG. 24

FIG. 25

FIG. 26

FIG. 27

FIG. 28

"MOTT"
DETECTOR

Electron-
Detectors

Target
(Gold Foil)

Exit Slit
of Energy-
Analyser

100keV-
Electron-
Accelerator

Electron Lenses

Sample

90° Spherical-
Deflector

B

Electron Beam

FIG. 29

## SECTION ACROSS THE MIDDLE PLANE

Exit slit

External deflection plate

$R_{ext}$

Internal deflection plate

$(V_{ext}+V_{int})/2$

$R_{int}$

Entrance slit

Top plate

$R_D$

$V_{ext}$

$V_{int}$

Bottom plate

$(V_{ext}+V_{int})/2-V_a$

FIG. 30

FIG. 31

(a)

(b)

FIG. 32

(a)

(b)

FIG. 33

(a)

(b)

FIG. 34

(a)

(b)

(c)

FIG. 35

FIG. 36

## INTERNATIONAL SEARCH REPORT

| International application No. |
| --- |
| **PCT/JP2021/026052** |

**A. CLASSIFICATION OF SUBJECT MATTER**

*H01J 37/05*(2006.01)i; *H01J 37/252*(2006.01)i; *G01N 23/227*(2018.01)i; *H01J 49/48*(2006.01)i
FI:   H01J37/252 Z; H01J49/48; H01J37/05; G01N23/227

According to International Patent Classification (IPC) or to both national classification and IPC

**B. FIELDS SEARCHED**

Minimum documentation searched (classification system followed by classification symbols)

H01J37/05; H01J37/252; G01N23/227; H01J49/48

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/216348 A1 (NARA INSTITUTE OF SCIENCE AND TECHNOLOGY) 14 November 2019 (2019-11-14)<br> paragraphs [0052]-[0064], fig. 20-28 | 1-17 |
| A | EDWARD D. JR., The segmented cylindrical mirror analyzer (CMA), Journal of Electron Spectroscopy and Related Phenomena, 07 April 2016, vol. 209, pp. 46-52<br> section 2 | 1-17 |
| A | 漁剛志, ほか, 高感度同軸対称　型電子エネルギー分析器の製作と評価, コインシデンス分光への応用, Journal of the Vacuum Society of Japan, 05 April 2003, vol. 46, no. 5, 2003, pp. 377-384 (ISARI, Kouji et al. Construction and Evaluation of Coaxially Symmetric Mirror Electron Energy Analyzer with High Sensitivity, and Its Application to Coincidence Spectroscopy.<br> section 2-4, fig. 2, 3 | 1-17 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 September 2021** | **28 September 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | International application No. |
| --- | --- |
| | **PCT/JP2021/026052** |

| Patent document cited in search report | Publication date (day/month/year) | Patent family member(s) | Publication date (day/month/year) |
| --- | --- | --- | --- |
| WO 2019/216348 A1 | 14 November 2019 | US 2021/0193448 A1 paragraphs [0129]-[0145], fig. 20-28 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4802340 B
- JP 4900389 B
- WO 2021125297 A
- WO 2012173007 A
- WO 2012066024 A

### Non-patent literature cited in the description

- **H. DAIMON.** New display-type analyzer for the energy and the angular distribution of charged particles. *Rev. Sci. Instrum.,* 1988, vol. 59, 545
- **F. MATSUI et al.** Three-dimensional band mapping of graphite. *Appl. Phys. Lett.,* 2002, vol. 81, 2556
- **F. MATSUI et al.** Atomic-orbital analysis of the Cu Fermi surface by two-dimensional photoelectron spectroscopy. *Phys. Rev. B,* 2005, vol. 72, 195417
- **F. MATSUI ; T. MATSUSHITA ; H. DAIMON.** Stereo atomscope and diffraction spectroscopy-Atomic site specific property analysis. *J. Electron Spectrosc. Relat. Phenom,* 2010, vol. 221, 178-179
- **F. MATSUI et al.** Selective detection of angular-momentum-polarized Auger electrons by atomic stereography. *Phys. Rev. Lett.,* 2015, vol. 114, 015501
- **H. MATSUDA ; H. DAIMON ; M. KATO ; M. KUDO.** Approach for simultaneous measurement of two-dimensional angular distribution of charged particles: Spherical aberration correction using an ellipsoidal mesh. *Phys. Rev. E,* 2005, vol. 71, 066503
- **H. MATSUDA ; H. DAIMON.** Approach for simultaneous measurement of two-dimensional angular distribution of charged particles. II. Deceleration and focusing of wide-angle beams using a curved mesh lens. *Phys. Rev. E,* 2006, vol. 74, 036501
- **H. MATSUDA et al.** Development of display-type ellipsoidal mesh analyzer: Computational evaluation and experimental validation. *J. Electron Spectrosc. Relat. Phenom.,* 2014, vol. 195, 382
- **M. KOTSUGI et al.** Microspectroscopic two-dimensional Fermi surface mapping using a photoelectron emission microscope. *Rev. Sci. Instrum.,* 2003, vol. 74, 2754
- **C. TUSCHE et al.** Spin resolved bandstructure imaging with a high resolution momentum microscope. *Ultramicroscopy,* 2015, vol. 159, 520
- **T. OKUDA et al.** *J. Electron Spectrosc. Relat. Phenom.,* 2015, vol. 201, 23
- **E. KISKER et al.** *Rev. Sci. Instrum.,* 1979, vol. 50, 1598
- **L.VATTUONE ; M.ROCCA.** Electrostatic electron analyzer with 90° deflection angle. *Rev. Sci. Instrum.,* 2002, vol. 73, 3861
- **A. W. ROSS et al.** *J. Electron Spectrosc. Relat. Phenom.,* 1994, vol. 69, 189
- **T. KOHASHI et al.** A spin rotator used for detecting all three magnetization vector components in spin-polarized electron microscopy. *J. Mag. Soc. Jpn.,* 1994, vol. 18, 7